(19) Europäisches Patentamt
European Patent Office
Office européen des brevets

(11) EP 4 385 753 B1

(12) EUROPEAN PATENT SPECIFICATION

(45) Date of publication and mention of the grant of the patent:
**04.06.2025 Bulletin 2025/23**

(21) Application number: **23209000.1**

(22) Date of filing: **10.11.2023**

(51) International Patent Classification (IPC):
***B60C 1/00*** *(2006.01)* ***B60C 11/00*** *(2006.01)*
***C08L 9/06*** *(2006.01)* ***C08F 236/22*** *(2006.01)*

(52) Cooperative Patent Classification (CPC):
(C-Sets available)
**C08L 9/06; B60C 1/00; B60C 1/0016; B60C 11/00; C08F 236/22** (Cont.)

# (54) TIRE

REIFEN

PNEUMATIQUE

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **29.11.2022 JP 2022190439**
**24.10.2023 JP 2023182572**

(43) Date of publication of application:
**19.06.2024 Bulletin 2024/25**

(73) Proprietor: **Sumitomo Rubber Industries, Ltd.**
**Kobe-shi, Hyogo 651-0072 (JP)**

(72) Inventors:
- **SATO, Daisuke**
  **Kobe-shi, Hyogo, 651-0072 (JP)**
- **KITAGO, Ryota**
  **Kobe-shi, Hyogo, 651-0072 (JP)**
- **HIRAO, Shogo**
  **Kobe-shi, Hyogo, 651-0072 (JP)**

(74) Representative: **Manitz Finsterwald**
**Patent- und Rechtsanwaltspartnerschaft mbB**
**Martin-Greif-Strasse 1**
**80336 München (DE)**

(56) References cited:
**EP-A1- 4 046 819 EP-B1- 2 810 964**

EP 4 385 753 B1

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

(52) Cooperative Patent Classification (CPC): (Cont.)

C-Sets
**C08F 236/22, C08F 2/06;**
**C08F 236/22, C08F 4/48;**
**C08F 236/22, C08F 212/08, C08F 236/06;**
**C08F 236/22, C08F 236/06, C08F 212/08;**
**C08L 9/06, C08L 9/06, C08L 9/06, C08L 9/00, C08L 91/00, C08L 25/16, C08L 47/00, C08L 91/08, C08K 3/04, C08K 3/36, C08K 5/548, C08K 5/18, C08K 5/3437, C08K 5/09, C08K 3/22, C08K 3/06, C08K 5/31, C08K 5/47**

## Description

TECHNICAL FIELD

The present invention relates to a tire.

BACKGROUND ART

Tires require a variety of properties. In recent years, it has become desirable to improve especially abrasion resistance, wet grip performance, and bleed resistance in a well-balanced manner.

SUMMARY OF INVENTION

TECHNICAL PROBLEM

The present invention aims to solve the above problem and provide a tire with excellent overall performance in terms of abrasion resistance, wet grip performance, and bleed resistance.

SOLUTION TO PROBLEM

The present invention relates to a tire, including a tread including a rubber composition that contains at least one rubber component and a branched conjugated diene polymer,

the branched conjugated diene polymer being a copolymer at least containing a branched conjugated diene, butadiene, and styrene as structural units,
the tire satisfying the following relationships (1) and (2):

Relationship (1):

$$0.25 < A \leq 1.50;$$

and

Relationship (2):

$$A \times S \leq 27.0$$

wherein A is defined by $A = 42.9/\sqrt{\alpha} + 0.14$ wherein $\alpha$ represents a weight average molecular weight of the branched conjugated diene polymer; and S represents a groove area ratio (%) of a ground contact surface of the tread.

ADVANTAGEOUS EFFECTS OF INVENTION

The tire according to the present invention includes a tread including a rubber composition that contains a rubber component and a branched conjugated diene polymer, wherein the branched conjugated diene polymer is a copolymer at least containing a branched conjugated diene, butadiene, and styrene as structural units, and the tire satisfies relationships (1) and (2). Thus, the present invention can provide a tire with excellent overall performance in terms of abrasion resistance, wet grip performance, and bleed resistance.

BRIEF DESCRIPTION OF DRAWINGS

FIG. 1 shows a meridional cross-sectional view of a tire 1 according to an embodiment of the present invention.
FIG. 2 shows a cross-sectional view of the tread 2 of the tire 1 taken along a plane including the tire axis.

DESCRIPTION OF EMBODIMENTS

[Tire]

The tire of the present invention includes a tread including a rubber composition that contains a rubber component and a branched conjugated diene polymer. The branched conjugated diene polymer is a copolymer at least containing a branched conjugated diene, butadiene, and styrene as structural units, and the tire satisfies the relationship (1): $0.25 < A \leq 1.50$ and the relationship (2): $A \times S \leq 27.0$.
The mechanism for the above-mentioned advantageous effect is not clear, but it is believed to be as follows.
A branched conjugated diene polymer at least containing a branched conjugated diene, butadiene, and styrene as structural units may provide improved compatibility with rubber components such as polybutadiene rubbers and styrene-butadiene rubbers. Particularly, when the branched conjugated diene polymer is controlled to satisfy the relationship (1): $0.25 < A \leq 1.50$, i.e., to adjust the weight average molecular weight of the branched conjugated diene polymer within a predetermined range, the single-domain phases may be decreased to further improve the compatibility. With the decrease of the single-domain phases, the bleeding of the branched conjugated diene polymer may be reduced, resulting in improved bleed resistance and abrasion resistance.
The branched conjugated diene polymer containing styrene as a structural unit may achieve high Tg, thereby improving wet grip performance.
When the value of A and the groove area ratio S (%) are controlled to satisfy the relationship (2): $A \times S \leq 27.0$, i.e., to increase the ground contact surface of the tread (or reduce the groove area ratio) while reducing the weight average molecular weight of the branched conjugated diene polymer, grip performance may be ensured and at the same time wear may be reduced, resulting in improved wet grip performance and abrasion resistance.
The above-described mechanism is believed to improve overall performance in terms of abrasion resistance, wet grip performance, and bleed resistance.
As discussed above, the tire can solve the problem (purpose) of improving overall performance in terms of abrasion resistance, wet grip performance, and bleed resistance by being formulated to satisfy the relationship (1): $0.25 < A \leq 1.50$ and the relationship (2): $A \times S \leq 27.0$. In other words, these relationships do not define the problem (purpose), and the problem herein is to improve overall performance in terms of abrasion resistance, wet grip performance, and bleed resistance. In order to solve this problem, the tire has been formulated to satisfy these parameters.
Here, relationships (1) and (2) can be controlled to be satisfied by appropriately selecting the weight average molecular weight of the branched conjugated diene polymer used and the groove area ratio of the ground contact surface of the tread.
The tire includes a tread including a rubber composition that contains a rubber component and a branched conjugated diene polymer.

(Rubber component)

The rubber composition contains one or more rubber components.
The weight average molecular weight of the rubber components is preferably 50,000 or more, more preferably 150,000 or more, still more preferably 200,000 or more, but it is preferably 2,000,000 or less, more preferably 1,500,000 or less, still more preferably 1,000,000 or less. When the weight average molecular weight is within the range indicated above, the advantageous effect tends to be better achieved.
Herein, the weight average molecular weight (Mw) of the rubber components can be determined by gel permeation chromatography (GPC) (GPC-8000 series available from Tosoh Corporation, detector: differential refractometer, column: TSKgel SuperMultipore HZ-M available from Tosoh Corporation) and calibrated with polystyrene standards.
Any rubber component may be used, including those known in the tire field. Examples include diene rubbers such as isoprene-based rubbers, polybutadiene rubbers (BR), styrene-butadiene rubbers (SBR), acrylonitrile-butadiene rubbers (NBR), chloroprene rubbers (CR), butyl rubbers (IIR), and styrene-isoprene-butadiene copolymer rubbers (SIBR). These may be used alone or in combinations of two or more. To better achieve the advantageous effect, it is preferred to use any of BR, SBR, and isoprene-based rubbers, among others. It is more preferred to use either of BR or SBR, and it is still more preferred to use both BR and SBR.
The mechanism for such an advantageous effect achieved by using at least one of isoprene-based rubbers, polybutadiene rubbers, and styrene-butadiene rubbers is not clear, but it is believed that these rubbers provide good abrasion resistance and good wet grip performance, and at the same time the combination of these rubbers with the branched conjugated diene polymer can have a larger effect in preventing bleeding, thereby resulting in improved overall performance in terms of abrasion resistance, wet grip performance, and bleed resistance.
Any BR may be used, and examples include those commonly used in the tire industry, including: high cis BR such as BR1220 available from Zeon Corporation, BR150B available from Ube Corporation, and BR1280 available from LG Chem; BR containing 1,2-syndiotactic polybutadiene crystals (SPB) such as VCR412 and VCR617 both available from

Ube Corporation; and polybutadiene rubbers synthesized using rare earth catalysts (rare earth-catalyzed BR). These may be used alone or in combinations of two or more. Hydrogenated polybutadiene polymers (hydrogenated BR) are also usable as the BR.

The cis content of the BR is preferably 80% by mass or higher, more preferably 85% by mass or higher, still more preferably 90% by mass or higher, further preferably 95% by mass or higher, but it is preferably 99% by mass or lower, more preferably 98% by mass or lower, still more preferably 97% by mass or lower. When the cis content is within the range indicated above, the advantageous effect tends to be better achieved.

Here, the cis content of the BR can be measured by infrared absorption spectrometry.

When one type of BR is used, the cis content of the BR refers to the cis content of the one BR, while when multiple types of BR are used, it refers to the average cis content.

The average cis content of the BR can be calculated using the equation: {Σ(amount of each BR × cis content of the each BR)}/amount of total BR. For example, when 100% by mass of rubber components include 20% by mass of BR having a cis content of 90% by mass and 10% by mass of BR having a cis content of 40% by mass, the average cis content of the BR is 73.3% by mass (= (20 × 90 + 10 × 40)/(20 + 10)).

The amount of BR, if present, based on 100% by mass of the rubber component content in the rubber composition is preferably 5% by mass or more, more preferably 20% by mass or more, still more preferably 30% by mass or more, but it is preferably 60% by mass or less, more preferably 50% by mass or less, still more preferably 40% by mass or less. When the amount is within the range indicated above, the advantageous effect tends to be better achieved.

Any SBR may be used, and examples include emulsion-polymerized styrene-butadiene rubbers (E-SBR) and solution-polymerized styrene-butadiene rubbers (S-SBR). Usable commercial products are available from Sumitomo Chemical Co., Ltd., JSR Corporation, Asahi Kasei Corporation, Zeon Corporation, etc. Hydrogenated styrene-butadiene copolymers (hydrogenated SBR) may also be used as the SBR.

The styrene content of the SBR is preferably 5% by mass or higher, more preferably 10% by mass or higher, still more preferably 15% by mass or higher, further preferably 19.4% by mass or higher, but it is preferably 60% by mass or lower, more preferably 55% by mass or lower, still more preferably 50% by mass or lower. When the styrene content is within the range indicated above, the advantageous effect tends to be better achieved.

Herein, the styrene content of the SBR can be determined by $^1$H-NMR analysis.

Particularly for use in summer tires, the styrene content of the SBR is preferably 10% by mass or higher, more preferably 15% by mass or higher, still more preferably 25% by mass or higher, but it is preferably 50% by mass or lower, more preferably 45% by mass or lower, still more preferably 40% by mass or lower. When the styrene content is within the range indicated above, the advantageous effect tends to be better achieved.

Particularly for use in winter tires, the styrene content of the SBR is preferably 5% by mass or higher, more preferably 10% by mass or higher, still more preferably 150 by mass or higher, but it is preferably 40% by mass or lower, more preferably 35% by mass or lower, still more preferably 30% by mass or lower. When the styrene content is within the range indicated above, the advantageous effect tends to be better achieved.

The vinyl content of the SBR is preferably 15% by mass or higher, more preferably 20% by mass or higher, still more preferably 24% by mass or higher, but it is preferably 50% by mass or lower, more preferably 40% by mass or lower, still more preferably 35% by mass or lower. When the vinyl content is within the range indicated above, the advantageous effect tends to be better achieved.

Herein, the vinyl content (1,2-butadiene unit content) of the SBR can be measured by infrared absorption spectrometry.

Here, when one type of SBR is used, the styrene content of the SBR refers to the styrene content of the one SBR, while when multiple types of SBR are used, it refers to the average styrene content.

The average styrene content of the SBR can be calculated using the equation: {Σ(amount of each SBR × styrene content of the each SBR)}/amount of total SBR. For example, when 100% by mass of rubber components include 85% by mass of SBR having a styrene content of 40% by mass and 5% by mass of SBR having a styrene content of 25% by mass, the average styrene content of the SBR is 39.2% by mass (= (85 × 40 + 5 × 25) / (85 + 5)).

Also, for example, when rubber components include 70% by mass of SBR (A) (styrene content 35% by mass, Mw 650,000), 10% by mass of SBR (B) (styrene content 40% by mass, Mw 950,000), 10% by mass of NR, and 10% by mass of BR, first, the content ratio of SBR (A) and SBR (B) are 0.875 (= 70/(70 + 10)) and 0.125 (= 10/(70 + 10)), respectively, and the average molecular weight of the SBR is 687,500 (= 0.875 × 650,000 + 0.125 × 950,000).

Then, the styrene content of the SBR is 35.86% by mass (= {70/(70 + 10) × 35 × 650,000 + 10/(70 + 10) × 40 × 950,000}/687,500).

The vinyl content of the SBR refers to the vinyl bond content (unit: % by mass) based on the total mass of the butadiene moieties in the SBR taken as 100. The sum of the vinyl content (% by mass), the cis content (% by mass), and the trans content (% by mass) equals 100 (% by mass). When one type of SBR is used, the viny content of the SBR refers to the vinyl content of the one SBR, while when multiple types of SBR are used, it refers to the average vinyl content.

The average vinyl content of the SBR can be calculated using the equation: Σ{amount of each SBR × (100 (% by

mass) - styrene content (% by mass) of the each SBR) × vinyl content (% by mass) of the each SBR}/Σ{amount of each SBR × (100 (% by mass) - styrene content (% by mass) of the each SBR)}. For example, when 100 parts by mass of rubber components include 75 parts by mass of SBR having a styrene content of 40% by mass and a vinyl content of 30% by mass, 15 parts by mass of SBR having a styrene content of 25% by mass and a vinyl content of 20% by mass, and the remaining 10 parts by mass of a rubber component other than SBR, the average vinyl content of the SBR is 28% by mass (= {75 × (100 (% by mass) - 40 (% by mass)) × 30 (% by mass) + 15 × (100 (% by mass) - 25 (% by mass)) × 20 (% by mass)}/{75 × (100 (% by mass) - 40 (% by mass)) + 15 × (100 (% by mass) - 25 (% by mass))}.

The amount of SBR, if present, based on 100% by mass of the rubber component content in the rubber composition is preferably 10% by mass or more, more preferably 40% by mass or more, still more preferably 50% by mass or more, particularly preferably 60% by mass or more, but it is preferably 90% by mass or less, more preferably 80% by mass or less, still more preferably 70% by mass or less. When the amount is within the range indicated above, the advantageous effect tends to be better achieved.

The combined amount of BR and SBR based on 100% by mass of the rubber component content in the rubber composition is preferably 20% by mass or more, more preferably 30% by mass or more, still more preferably 40% by mass or more, and may be 100% by mass. When the combined amount is within the range indicated above, the advantageous effect tends to be better achieved.

Particularly for use in summer tires, the combined amount of BR and SBR based on 100% by mass of the rubber component content in the rubber composition is preferably 40% by mass or more, more preferably 60% by mass or more, still more preferably 70% by mass or more, and may be 1000 by mass. When the combined amount is within the range indicated above, the advantageous effect tends to be better achieved.

Particularly for use in winter tires, the combined amount of BR and SBR based on 100% by mass of the rubber component content in the rubber composition is preferably 70% by mass or more, more preferably 80% by mass or more, still more preferably 90% by mass or more, and may be 100% by mass. When the combined amount is within the range indicated above, the advantageous effect tends to be better achieved.

Examples of isoprene-based rubbers include natural rubbers (NR), polyisoprene rubbers (IR), refined NR, modified NR, and modified IR. Examples of NR include those commonly used in the tire industry such as SIR20, RSS#3, and TSR20. Any IR may be used, including for example those commonly used in the tire industry such as IR2200. Examples of refined NR include deproteinized natural rubbers (DPNR) and highly purified natural rubbers (UPNR). Examples of modified NR include epoxidized natural rubbers (ENR), hydrogenated natural rubbers (HNR), and grafted natural rubbers. Examples of modified IR include epoxidized polyisoprene rubbers, hydrogenated polyisoprene rubbers, and grafted polyisoprene rubbers. These may be used alone or in combinations of two or more. NR is preferred among these.

The amount of isoprene-based rubbers, if present, based on 100% by mass of the rubber component content in the rubber composition is preferably 5% by mass or more, more preferably 10% by mass or more, still more preferably 15% by mass or more, but it is preferably 40% by mass or less, more preferably 30% by mass or less, still more preferably 25% by mass or less. When the amount is within the range indicated above, the advantageous effect tends to be better achieved.

The rubber components may include extended rubbers that have been extended with plasticizer components such as oils, resins, or liquid polymers. These may be used alone or in combinations of two or more. Examples of the plasticizers used in the extended rubbers include those described later. The plasticizer content of the extended rubbers is not limited, but it is usually about 10 to 50 parts by mass per 100 parts by mass of the rubber solid content.

The rubber components may be modified to introduce therein a functional group interactive with filler such as silica.

Examples of the functional group include a silicon-containing group ($-SiR_3$ where each R is the same or different and represents a hydrogen atom, a hydroxy group, a hydrocarbon group, an alkoxy group, or the like), an amino group, an amide group, an isocyanate group, an imino group, an imidazole group, a urea group, an ether group, a carbonyl group, an oxycarbonyl group, a mercapto group, a sulfide group, a disulfide group, a sulfonyl group, a sulfinyl group, a thiocarbonyl group, an ammonium group, an imide group, a hydrazo group, an azo group, a diazo group, a carboxy group, a nitrile group, a pyridyl group, an alkoxy group, a hydroxy group, an oxy group, and an epoxy group, each of which may be substituted. Preferred among these is a silicon-containing group. More preferred is $-SiR_3$ where each R is the same or different and represents a hydrogen atom, a hydroxy group, a hydrocarbon group (preferably a C1-C6 hydrocarbon group, more preferably a C1-C6 alkyl group), or an alkoxy group (preferably a C1-C6 alkoxy group), and at least one R is a hydroxy group.

Specific examples of the compound (modifier) used to introduce the functional group include 2-dimethylaminoethyltrimethoxysilane, 3-dimethylaminopropyltrimethoxysilane, 2-dimethylaminoethyltriethoxysilane, 3-dimethylaminopropyltriethoxysilane, 2-diethylaminoethyltrimethoxysilane, 3-diethylaminopropyltrimethoxysilane, 2-diethylaminoethyltriethoxysilane, and 3-diethylaminopropyltriethoxysilane.

(Branched conjugated diene polymer)

The rubber composition contains a branched conjugated diene polymer at least containing a branched conjugated diene, butadiene, and styrene as structural units. One or two or more branched conjugated diene polymers may be used.
The term "branched conjugated diene" in the present invention refers to a compound having a branched conjugated diene structure in which double bonds are separated by one single bond. Moreover, the compound may or may not contain other double bonds.
Examples of the branched conjugated diene used to form the branched conjugated diene polymer include 2,3-dimethyl-1,3-butadiene, 2,4-dimethyl-1,3-pentadiene, 3-methyl-1,3-pentadiene, farnesene, and myrcene. To better achieve the advantageous effect, farnesene and myrcene are preferred among these, with farnesene being more preferred. One or two or more branched conjugated dienes may be used.
The mechanism for such an advantageous effect achieved by using farnesene is not clear, but it is believed that the use of farnesene may further improve the compatibility with rubbers to provide abrasion resistance and wet grip performance and also to reduce bleeding, thereby resulting in improved overall performance in terms of abrasion resistance, wet grip performance, and bleed resistance.
Several isomers of farnesene exist, such as α-farnesene ((3E,7E)-3,7,11-trimethyl-1,3,6,10-dodecatetraene) and β-farnesene (7,11-dimethyl-3-methylene-1,6,10-dodecatriene). Preferred among these is (E)-β-farnesene (7,11-dimethyl-3-methylene-1,6,10-dodecatriene) having the following structure:

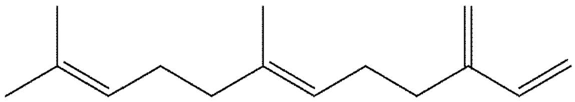

.

The term "myrcene" includes both α-myrcene (2-methyl-6-methyleneocta-1,7-diene) and β-myrcene. Preferred among these is β-myrcene (7-methyl-3-methyleneocta-1,6-diene) having the following structure:

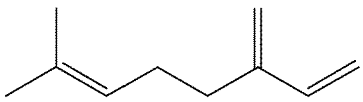

.

The butadiene used to form the branched conjugated diene polymer is desirably 1,3-butadiene.
Here, the branched conjugated diene polymer may be incorporated in place of a conventionally-used plasticizer such as an oil.
The branched conjugated diene polymer may be any copolymer that at least contains a branched conjugated diene, butadiene, and styrene as structural units. To better achieve the advantageous effect, it is preferably a copolymer at least containing farnesene, butadiene, and styrene as structural units or a copolymer at least containing myrcene, butadiene, and styrene as structural units, more preferably a copolymer of farnesene, butadiene, and styrene or a copolymer of myrcene, butadiene, and styrene.
The weight average molecular weight (Mw) of the branched conjugated diene polymer is preferably 1000 or more, more preferably 4000 or more, still more preferably 5000 or more, further preferably 9000 or more, particularly preferably 10000 or more, but it is preferably 100000 or less, more preferably 30000 or less, still more preferably 25000 or less, further preferably 20000 or less, further preferably 15000 or less, further preferably 12000 or less. When the Mw is within the range indicated above, the advantageous effect tends to be better achieved.
The mechanism for such an advantageous effect achieved by adjusting the Mw within a predetermined range is not clear, but it is believed that the Mw within a predetermined range may ensure the compatibility with rubbers to ensure good abrasion resistance and good wet grip performance and also to sufficiently reduce bleeding, thereby resulting in improved overall performance in terms of abrasion resistance, wet grip performance, and bleed resistance.
Herein, the weight average molecular weight (Mw) of the branched conjugated diene polymer can be determined by gel permeation chromatography (GPC) (GPC device "HLC-8320" available from Tosoh Corporation, detector: differential refractometer, column: TSKgel Super HZM-M available from Tosoh Corporation) and calibrated with polystyrene standards.
The amount of branched conjugated dienes based on 100% by mass of the monomer components in the branched conjugated diene polymer (the branched conjugated diene unit content based on 100% by mass of the branched conjugated diene polymer) is preferably 30% by mass or higher, more preferably 40% by mass or higher, still more preferably 50% by mass or higher, but it is preferably 80% by mass or lower, more preferably 70% by mass or lower, still

more preferably 60% by mass or lower. When the amount is within the range indicated above, the advantageous effect tends to be better achieved.

The amount of butadiene based on 100% by mass of the monomer components in the branched conjugated diene polymer (the butadiene unit content based on 100% by mass of the branched conjugated diene polymer) is preferably 5% by mass or higher, more preferably 18% by mass or higher, still more preferably 20% by mass or higher, further preferably 25% by mass or higher, further preferably 30% by mass or higher, but it is preferably 70% by mass or lower, more preferably 50% by mass or lower, still more preferably 40% by mass or lower, further preferably 35% by mass or lower. When the amount is within the range indicated above, the advantageous effect tends to be better achieved.

The amount of styrene based on 100% by mass of the monomer components in the branched conjugated diene polymer (the styrene unit content based on 100% by mass of the branched conjugated diene polymer) is preferably 2% by mass or higher, more preferably 5% by mass or higher, still more preferably 8% by mass or higher, further preferably 10% by mass or higher, but it is preferably 40% by mass or lower, more preferably 35% by mass or lower, still more preferably 30% by mass or lower, further preferably 25% by mass or lower, further preferably 20% by mass or lower. When the amount is within the range indicated above, the advantageous effect tends to be better achieved.

The amount of butadiene (the butadiene unit content (% by mass) based on 100% by mass of the branched conjugated diene polymer) and the amount of styrene (the styrene unit content (% by mass) based on 100% by mass of the branched conjugated diene polymer) each based on 100% by mass of the monomer components in the branched conjugated diene polymer desirably satisfy the following relationship:

$$0.40 \leq 0.013 \times \text{butadiene unit content} + 0.071 \times \text{styrene unit content} \leq 2.70.$$

The lower limit is preferably 0.70 or more, more preferably 0.80 or more, still more preferably 0.90 or more, particularly preferably 0.97 or more, while the upper limit is preferably 2.50 or less, more preferably 2.30 or less, still more preferably 2.23 or less, further preferably 2.20 or less, further preferably 1.68 or less. When the limits are within the respective ranges indicated above, the advantageous effect tends to be better achieved.

The mechanism for such an advantageous effect achieved by adjusting the value of "0.013 × butadiene unit content + 0.071 × styrene unit content" within a predetermined range is not clear, but it is believed that in this case, the compatibility with rubber components may be improved to improve abrasion resistance, and the single-domain phases may be decreased to improve bleed resistance; further, the styrene may achieve high Tg to improve wet grip performance, thereby resulting in improved overall performance in terms of abrasion resistance, wet grip performance, and bleed resistance.

The branched conjugated diene polymer can be synthesized by known techniques. For example, it may be synthesized by anionic polymerization in which a sufficiently nitrogen-purged pressure-resistant vessel may be charged with hexane, a branched conjugated diene, butadiene, styrene, and sec-butyllithium, and optionally other vinyl monomers, and then the mixture may be increased in temperature and stirred for several hours to obtain a polymerized solution, which may then be quenched and vacuum dried to obtain a branched conjugated diene polymer.

The polymerization procedure in the preparation of the branched conjugated diene polymer is not limited. For example, all monomers may be randomly copolymerized at once. Alternatively, a specific monomer (e.g., only a branched conjugated diene monomer, only a butadiene monomer, or only a styrene monomer) may previously be polymerized and then the remaining monomers may be added and copolymerized. Alternatively, each specific monomer may previously be polymerized and then the resulting polymers may be block-copolymerized.

The amount of the branched conjugated diene polymers per 100 parts by mass of the rubber component content in the rubber composition is preferably 3 parts by mass or more, more preferably 6 parts by mass or more, still more preferably 8 parts by mass or more, but it is preferably 50 parts by mass or less, more preferably 30 parts by mass or less, still more preferably 20 parts by mass or less. When the amount is within the range indicated above, the advantageous effect tends to be better achieved.

(Filler)

To better achieve the advantageous effect, the rubber composition desirably contains a filler.

The amount of fillers per 100 parts by mass of the rubber component content in the rubber composition is preferably 30 parts by mass or more, more preferably 70 parts by mass or more, still more preferably 100 parts by mass or more, particularly preferably 120 parts by mass or more, but it is preferably 250 parts by mass or less, more preferably 200 parts by mass or less, still more preferably 170 parts by mass or less, particularly preferably 150 parts by mass or less. When the amount is within the range indicated above, the advantageous effect tends to be better achieved.

The mechanism for such an advantageous effect achieved by adjusting the amount of fillers within a predetermined range is not clear, but it is believed that in this case, sufficient reinforcement of the rubber may be achieved to

provide abrasion resistance and wet grip performance, thereby resulting in improved overall performance in terms of abrasion resistance, wet grip performance, and bleed resistance.

The filler used may be a material known in the rubber field. Examples include inorganic fillers such as silica, carbon black, calcium carbonate, talc, alumina, clay, aluminum hydroxide, aluminum oxide, and mica; bio char; and recycled carbon black. To better achieve the advantageous effect, carbon black and silica are preferred among these.

The mechanism for such an advantageous effect achieved by using silica and carbon black is not clear, but it is believed that the combination of these fillers may achieve sufficient reinforcement of the rubber to provide abrasion resistance and wet grip performance, thereby resulting in improved overall performance in terms of abrasion resistance, wet grip performance, and bleed resistance.

Non-limiting examples of carbon black include N134, N110, N220, N234, N219, N339, N330, N326, N351, N550, and N762. Usable commercial products are available from Asahi Carbon Co., Ltd., Cabot Japan K.K., Tokai Carbon Co., Ltd., Mitsubishi Chemical Corporation, Lion Corporation, NIPPON STEEL Carbon Co., Ltd., Columbia Carbon, etc. In addition to the carbon black made from mineral oils, etc., carbon black made from biomass materials such as lignin is also usable. These may be used alone or in combinations of two or more.

The nitrogen adsorption specific surface area ($N_2SA$) of the carbon black is preferably 30 $m^2/g$ or more, more preferably 35 $m^2/g$ or more, still more preferably 40 $m^2/g$ or more, but it is preferably 200 $m^2/g$ or less, more preferably 170 $m^2/g$ or less, still more preferably 150 $m^2/g$ or less, further preferably 148 $m^2/g$ or less. When the $N_2SA$ is within the range indicated above, the advantageous effect tends to be better achieved.

Here, the nitrogen adsorption specific surface area of the carbon black can be determined in accordance with JIS K 6217-2:2001.

The amount of carbon black per 100 parts by mass of the rubber component content in the rubber composition is preferably 5 parts by mass or more, more preferably 8 parts by mass or more, still more preferably 10 parts by mass or more, but it is preferably 50 parts by mass or less, more preferably 40 parts by mass or less, still more preferably 30 parts by mass or less. When the amount is within the range indicated above, the advantageous effect tends to be better achieved.

Examples of silica include dry silica (anhydrous silica) and wet silica (hydrous silica). Wet silica is preferred among these because it contains a large number of silanol groups. Usable commercial products are available from Degussa, Rhodia, Tosoh Silica Corporation, Solvay Japan, Tokuyama Corporation, etc. Also usable is silica made from biomass materials such as rice husks. These may be used alone or in combinations of two or more.

The nitrogen adsorption specific surface area ($N_2SA$) of the silica is preferably 50 $m^2/g$ or more, more preferably 100 $m^2/g$ or more, still more preferably 150 $m^2/g$ or more, particularly preferably 170 $m^2/g$ or more. Moreover, the upper limit of the $N_2SA$ of the silica is not limited, and it is preferably 350 $m^2/g$ or less, more preferably 300 $m^2/g$ or less, still more preferably 250 $m^2/g$ or less. When the $N_2SA$ is within the range indicated above, the advantageous effect tends to be better achieved. Here, when multiple types of silica are used, the $N_2SA$ of the total silica used is desirably within the range indicated above. Moreover, the $N_2SA$ of each of the multiple types of silica blended is desirably within the range indicated above.

Here, the $N_2SA$ of the silica is measured by a BET method in accordance with ASTM D3037-93.

The amount of silica per 100 parts by mass of the rubber component content in the rubber composition is preferably 20 parts by mass or more, more preferably 60 parts by mass or more, still more preferably 90 parts by mass or more, particularly preferably 110 parts by mass or more, but it is preferably 250 parts by mass or less, more preferably 200 parts by mass or less, still more preferably 160 parts by mass or less, particularly preferably 140 parts by mass or less. When the amount is within the range indicated above, the advantageous effect tends to be better achieved.

(Silane coupling agent)

The rubber composition containing silica preferably further contains a silane coupling agent.

Any silane coupling agent may be used, including those known in the rubber field. Examples include sulfide silane coupling agents such as bis(3-triethoxysilylpropyl)tetrasulfide, bis(2-triethoxysilylethyl)tetrasulfide, bis(4-triethoxysilylbutyl)tetrasulfide, bis(3-trimethoxysilylpropyl)tetrasulfide, bis(2-trimethoxysilylethyl)tetrasulfide, bis(2-triethoxysilylethyl) trisulfide, bis(4-trimethoxysilylbutyl)trisulfide, bis(3-triethoxysilylpropyl)disulfide, bis(2-triethoxysilylethyl)disulfide, bis(4-triethoxysilylbutyl)disulfide, bis(3-trimethoxysilylpropyl)disulfide, bis(2-trimethoxysilylethyl)disulfide, bis(4-trimethoxysilylbutyl)disulfide, 3-trimethoxysilylpropyl-N,N-dimethylthiocarbamoyltetrasulfide, 2-triethoxysilylethyl-N,N-dimethylthiocarbamoyltetrasulfide, and 3-triethoxysilylpropyl methacrylate monosulfide; mercapto silane coupling agents such as 3-mercaptopropyltrimethoxysilane, 2-mercaptoethyltriethoxysilane, and NXT and NXT-Z both available from Momentive; vinyl silane coupling agents such as vinyltriethoxysilane and vinyltrimethoxysilane; amino silane coupling agents such as 3-aminopropyltriethoxysilane and 3-aminopropyltrimethoxysilane; glycidoxy silane coupling agents such as $\gamma$-glycidoxypropyltriethoxysilane and $\gamma$-glycidoxypropyltrimethoxysilane; nitro silane coupling agents such as 3-nitropropyltrimethoxysilane and 3-nitropropyltriethoxysilane; and chloro silane coupling agents such as 3-chloropropyltrimethoxysilane and 3-chloropropyltriethoxysilane. Sulfide silane coupling agents and mercapto silane coupling agents are preferred

among these, with mercapto silane coupling agents being more preferred. Here, usable commercial products are available from Degussa, Momentive, Shin-Etsu Silicone, Tokyo Chemical Industry Co., Ltd., AZmax. Co., Dow Corning Toray Co., Ltd., etc. These may be used alone or in combinations of two or more.

The mechanism for such an advantageous effect achieved by using a mercapto silane coupling agent is not clear, but it is believed that in this case, the rubber composition containing silica may achieve a sufficient reinforcement effect to provide abrasion resistance and wet grip performance, thereby resulting in improved overall performance in terms of abrasion resistance, wet grip performance, and bleed resistance.

Usable mercapto silane coupling agents include compounds having a mercapto group and compounds in which a mercapto group is protected by a protecting group (for example, compounds represented by Formula (S1) below).

Examples of particularly suitable mercapto silane coupling agents include silane coupling agents represented by Formula (S1) below and silane coupling agents containing linking units A and B represented by Formulas (I) and (II), respectively, below.

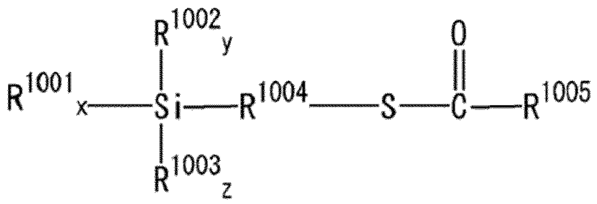

(S1)

In Formula (S1), $R^{1001}$ represents a monovalent group selected from -Cl, -Br, $-OR^{1006}$, $-O(O=)CR^{1006}$, $-ON=CR^{1006}R^{1007}$, $-NR^{1006}R^{1007}$, and $-(OSiR^{1006}R^{1007})_h(OSiR^{1006}R^{1007}R^{1008})$ wherein $R^{1006}$, $R^{1007}$, and $R^{1008}$ may be the same or different and each represent a hydrogen atom or a C1-C18 monovalent hydrocarbon group, and h is 1 to 4 on average; $R^{1002}$ represents $R^{1001}$, a hydrogen atom, or a C1-C18 monovalent hydrocarbon group; $R^{1003}$ represents the group: $-[O(R^{1009}O)_j]-$wherein $R^{1009}$ represents a C1-C18 alkylene group, and j represents an integer of 1 to 4; $R^{1004}$ represents a C1-C18 divalent hydrocarbon group; $R^{1005}$ represents a C1-C18 monovalent hydrocarbon group; and x, y, and z are numbers satisfying the following relationships: $x + y + 2z = 3$, $0 \leq x \leq 3$, $0 \leq y \leq 2$, and $0 \leq z \leq 1$.

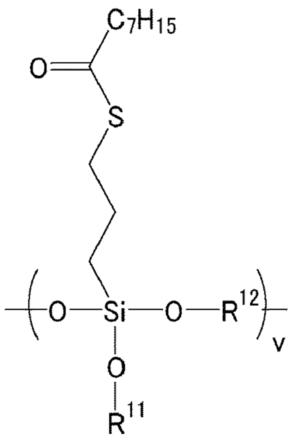

(I)

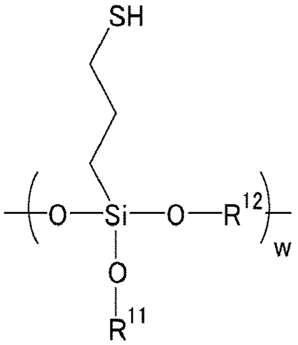

(II)

In Formulas (I) and (II), v represents an integer of 0 or more; w represents an integer of 1 or more; $R^{11}$ represents a hydrogen atom, a halogen atom, a branched or unbranched C1-C30 alkyl group, a branched or unbranched C2-C30

alkenyl group, a branched or unbranched C2-C30 alkynyl group, or the alkyl group in which a terminal hydrogen atom is replaced with a hydroxy or carboxyl group; $R^{12}$ represents a branched or unbranched C1-C30 alkylene group, a branched or unbranched C2-C30 alkenylene group, or a branched or unbranched C2-C30 alkynylene group; and $R^{11}$ and $R^{12}$ may together form a ring structure.

Preferably, $R^{1005}$, $R^{1006}$, $R^{1007}$, and $R^{1008}$ in Formula (S1) are each independently selected from the group consisting of C1-C18 linear, cyclic, or branched alkyl, alkenyl, aryl, and aralkyl groups. When $R^{1002}$ is a C1-C18 monovalent hydrocarbon group, it is preferably selected from the group consisting of linear, cyclic, or branched alkyl, alkenyl, aryl, and aralkyl groups. $R^{1009}$ is preferably a linear, cyclic, or branched alkylene group, particularly preferably a linear alkylene group. Examples of $R^{1004}$ include C1-C18 alkylene groups, C2-C18 alkenylene groups, C5-C18 cycloalkylene groups, C6-C18 cycloalkylalkylene groups, C6-C18 arylene groups, and C7-C18 aralkylene groups. The alkylene and alkenylene groups may be either linear or branched. The cycloalkylene, cycloalkylalkylene, arylene, and aralkylene groups may each have a functional group such as a lower alkyl group on the ring. $R^{1004}$ is preferably a C1-C6 alkylene group, particularly preferably a linear alkylene group such as a methylene group, an ethylene group, a trimethylene group, a tetramethylene group, a pentamethylene group, or a hexamethylene group.

Specific examples of $R^{1002}$, $R^{1005}$, $R^{1006}$, $R^{1007}$, and $R^{1008}$ in Formula (S1) include methyl, ethyl, n-propyl, isopropyl, n-butyl, isobutyl, sec-butyl, tert-butyl, pentyl, hexyl, octyl, decyl, dodecyl, cyclopentyl, cyclohexyl, vinyl, propenyl, allyl, hexenyl, octenyl, cyclopentenyl, cyclohexenyl, phenyl, tolyl, xylyl, naphthyl, benzyl, phenethyl, and naphthylmethyl groups.

For $R^{1009}$ in Formula (S1), examples of the linear alkylene group include methylene, ethylene, n-propylene, n-butylene, and hexylene groups, and examples of the branched alkylene group include isopropylene, isobutylene, and 2-methylpropylene groups.

Specific examples of the silane coupling agents of Formula (S1) include 3-hexanoylthiopropyltriethoxysilane, 3-octanoylthiopropyltriethoxysilane, 3-decanoylthiopropyltriethoxysilane, 3-lauroylthiopropyltriethoxysilane, 2-hexanoylthioethyltriethoxysilane, 2-octanoylthioethyltriethoxysilane, 2-decanoylthioethyltriethoxysilane, 2-lauroylthioethyltriethoxysilane, 3-hexanoylthiopropyltrimethoxysilane, 3-octanoylthiopropyltrimethoxysilane, 3-decanoylthiopropyltrimethoxysilane, 3-lauroylthiopropyltrimethoxysilane, 2-hexanoylthioethyltrimethoxysilane, 2-octanoylthioethyltrimethoxysilane, 2-decanoylthioethyltrimethoxysilane, and 2-lauroylthioethyltrimethoxysilane. These may be used alone or in combinations of two or more. Particularly preferred among these is 3-octanoylthiopropyltriethoxysilane.

The linking unit A content of the silane coupling agents containing the linking units A and B of Formulas (I) and (II) is preferably 30 mol% or higher, more preferably 50 mol% or higher, but it is preferably 99 mol% or lower, more preferably 90 mol% or lower. On the other hand, the linking unit B content is preferably 1 mol% or higher, more preferably 5 mol% or higher, still more preferably 10 mol% or higher, but it is preferably 70 mol% or lower, more preferably 65 mol% or lower, still more preferably 55 mol% or lower. Moreover, the combined content of linking units A and B is preferably 95 mol% or higher, more preferably 98 mol% or higher, particularly preferably 100 mol%.

Here, the linking unit A or B content refers to the amount including the linking unit A or B present at the end of the silane coupling agent, if any. When the linking unit A or B is present at the end of the silane coupling agent, its form is not limited as long as it forms a unit corresponding to Formula (I) or (II) representing the linking unit A or B.

For $R^{11}$ in Formulas (I) and (II), examples of the halogen atom include chlorine, bromine, and fluorine; examples of the branched or unbranched C1-C30 alkyl group include methyl and ethyl groups; examples of the branched or unbranched C2-C30 alkenyl group include vinyl and 1-propenyl groups; and examples of the branched or unbranched C2-C30 alkynyl group include ethynyl and propynyl groups.

For $R^{12}$ in Formulas (I) and (II), examples of the branched or unbranched C1-C30 alkylene group include ethylene and propylene groups; examples of the branched or unbranched C2-C30 alkenylene group include vinylene and 1-propenylene groups; and examples of the branched or unbranched C2-C30 alkynylene group include ethynylene and propynylene groups.

In the silane coupling agents containing the linking units A and B of Formulas (I) and (II), the total number of repetitions (v + w) consisting of the sum of the number of repetitions (v) of the linking unit A and the number of repetitions (w) of the linking unit B is preferably in the range of 3 to 300.

The amount of silane coupling agents per 100 parts by mass of the silica content in the rubber composition is preferably 3 parts by mass or more, more preferably 6 parts by mass or more. The amount is also preferably 20 parts by mass or less, more preferably 15 parts by mass or less, still more preferably 10 parts by mass or less. Here, a similar range is also desirable for the amount of mercapto silane coupling agents.

(Plasticizer)

The rubber composition may contain a plasticizer.

Here, the term "plasticizer" refers to a material that can impart plasticity to rubber components. Examples include liquid plasticizers (plasticizers which are liquid at room temperature (25°C)), resins (resins which are solid at room

temperature (25°C)), and ester plasticizers.

In the present invention, the above-described "branched conjugated diene polymer" is included in the term "plasticizer" when it is a material that can impart plasticity to rubber components. In this case, the amount of plasticizers (total plasticizer content) refers to the combined amount of such branched conjugated diene polymers (with plasticity) and other plasticizers.

The amount of plasticizers (total plasticizer content) per 100 parts by mass of the rubber component content in the rubber composition is preferably 10 parts by mass or more, more preferably 30 parts by mass or more, still more preferably 40 parts by mass or more, particularly preferably 47 parts by mass or more, but it is preferably 100 parts by mass or less, more preferably 70 parts by mass or less, still more preferably 60 parts by mass or less. When the amount is within the range indicated above, the advantageous effect tends to be better achieved.

Here, the amount of plasticizers includes the amount of plasticizer components used in the extended rubbers, if used.

Non-limiting examples of the liquid plasticizers (plasticizers which are liquid at room temperature (25°C)) include oils and liquid polymers (e.g., liquid resins, liquid diene polymers). To better achieve the advantageous effect, oils, liquid resins, and liquid diene polymers are desirable among these. These may be used alone or in combinations of two or more.

The mechanism for such an advantageous effect achieved by using an oil, a liquid resin, or a liquid diene polymer is not clear, but it is believed that such a plasticizer may provide good grip performance, thereby resulting in improved overall performance in terms of abrasion resistance, wet grip performance, and bleed resistance.

The amount of liquid plasticizers per 100 parts by mass of the rubber component content in the rubber composition is preferably 5 parts by mass or more, more preferably 8 parts by mass or more, still more preferably 10 parts by mass or more, but it is preferably 50 parts by mass or less, more preferably 30 parts by mass or less, still more preferably 20 parts by mass or less. When the amount is within the range indicated above, the advantageous effect tends to be better achieved.

Here, the amount of liquid plasticizers includes the amount of oils contained in the extended rubbers, if used.

When the branched conjugated diene polymer used corresponds to a plasticizer which is liquid at room temperature (25°C), the amount of liquid plasticizers refers to the combined amount of such branched conjugated diene polymers and other liquid plasticizers.

Examples of oils include process oils, plant oils, and mixtures thereof. Examples of the process oils include paraffinic process oils, aromatic process oils, and naphthenic process oils. Examples of the plant oils include castor oil, cotton seed oil, linseed oil, rapeseed oil, soybean oil, palm oil, coconut oil, peanut oil, rosin, pine oil, pine tar, tall oil, corn oil, rice oil, safflower oil, sesame oil, olive oil, sunflower oil, palm kernel oil, camellia oil, jojoba oil, macadamia nut oil, and tung oil. Process oils, such as paraffinic process oils, aromatic process oils, and naphthenic process oils, and plant oils are preferred among these. Here, in view of life cycle assessment, oils that have been used as lubricating oils in mixers for mixing rubber, engines, or other applications, waste cooking oils, and other used oils may appropriately be used as the process oils or plant oils.

Examples of liquid resins include terpene resins (including terpene phenol resins and aromatic modified terpene resins), rosin resins, styrene resins, C5 resins, C9 resins, C5/C9 resins, dicyclopentadiene (DCPD) resins, coumarone-indene resins (including resins based on coumarone or indene alone), phenol resins, olefin resins, polyurethane resins, and acrylic resins. Hydrogenated products of these resins are also usable.

Examples of liquid diene polymers include liquid styrene-butadiene copolymers (liquid SBR), liquid polybutadiene polymers (liquid BR), liquid polyisoprene polymers (liquid IR), liquid styrene-isoprene copolymers (liquid SIR), liquid styrene-butadiene-styrene block copolymers (liquid SBS block polymers), and liquid styrene-isoprene-styrene block copolymers (liquid SIS block polymers), all of which are liquid at 25°C. The chain end or backbone of these polymers may be modified with a polar group. Moreover, hydrogenated products of these polymers are also usable.

Examples of the aforementioned resins (resins which are solid at room temperature (25°C)) include aromatic vinyl polymers, coumarone-indene resins, coumarone resins, indene resins, phenol resins, rosin resins, petroleum resins, terpene resins, p-t-butylphenol acetylene resins, and acrylic resins, all of which are solid at room temperature (25°C). These resins may also be hydrogenated. These may be used alone or in combinations of two or more.

The amount of the aforementioned resins per 100 parts by mass of the rubber component content in the rubber composition is preferably 5 parts by mass or more, more preferably 7 parts by mass or more, still more preferably 9 parts by mass or more, but it is preferably 50 parts by mass or less, more preferably 30 parts by mass or less, still more preferably 20 parts by mass or less. When the amount is within the range indicated above, the advantageous effect tends to be better achieved.

The mechanism for such an advantageous effect achieved by adjusting the amount of the aforementioned resins within a predetermined range is not clear, but it is believed that in this case, the compatibility with rubbers may be improved to provide abrasion resistance and wet grip performance and also to reduce bleeding, thereby resulting in improved overall performance in terms of abrasion resistance, wet grip performance, and bleed resistance.

The softening point of the aforementioned resins is preferably 50°C or higher, more preferably 55°C or higher, still

more preferably 60°C or higher, further preferably 85°C or higher. The upper limit is preferably 160°C or lower, more preferably 150°C or lower, still more preferably 145°C or lower. When the softening point is within the range indicated above, the advantageous effect tends to be better achieved.

The softening point of the aforementioned resins is determined as set forth in JIS K 6220-1:2001 using a ring and ball softening point measuring apparatus, and the temperature at which the ball drops down is defined as the softening point.

Here, the softening point of the aforementioned resins is usually within about 50°C ± 5°C of the glass transition temperature of the resin components.

The aromatic vinyl polymers refer to polymers containing aromatic vinyl monomers as structural units, such as styrene resins, etc. Examples of the styrene resins include resins produced by polymerization of α-methylstyrene and/or styrene. Specific examples include styrene homopolymers (styrene resins), α-methylstyrene homopolymers (α-methylstyrene resins), copolymers of α-methylstyrene and styrene, and copolymers of styrene and other monomers.

The coumarone-indene resins refer to resins containing coumarone and indene as the main monomer components constituting the skeleton (backbone) of the resins. Examples of monomer components which may be contained in the skeleton in addition to coumarone and indene include styrene, α-methylstyrene, methylindene, and vinyltoluene.

The coumarone resins refer to resins containing coumarone as the main monomer component constituting the skeleton (backbone) of the resins.

The indene resins refer to resins containing indene as the main monomer component constituting the skeleton (backbone) of the resins.

Examples of the phenol resins include known polymers produced by reacting phenol with an aldehyde such as formaldehyde, acetaldehyde, or furfural in the presence of an acid or alkali catalyst. Preferred among these are those produced by reaction in the presence of an acid catalyst, such as novolac phenol resins.

Examples of the rosin resins include rosin resins typified by natural rosins, polymerized rosins, modified rosins, and esterified compounds thereof, and hydrogenated products thereof.

Examples of the petroleum resins include C5 resins, C9 resins, C5/C9 resins, dicyclopentadiene (DCPD) resins, and hydrogenated products of these resins. DCPD resins or hydrogenated DCPD resins are preferred among these.

The terpene resins refer to polymers containing terpenes as structural units. Examples include polyterpene resins produced by polymerization of terpene compounds, and aromatic modified terpene resins produced by polymerization of terpene compounds and aromatic compounds. Examples of usable aromatic modified terpene resins include terpene-phenol resins made from terpene compounds and phenolic compounds, terpene-styrene resins made from terpene compounds and styrene compounds, and terpene-phenol-styrene resins made from terpene compounds, phenolic compounds, and styrene compounds. Here, examples of the terpene compounds include α-pinene and β-pinene; examples of the phenolic compounds include phenol and bisphenol A; and examples of the aromatic compounds include styrene compounds such as styrene and α-methylstyrene.

Examples of the p-t-butylphenol acetylene resins include solid resins obtained by condensation reaction of p-t-butylphenol and acetylene.

The acrylic resins refer to polymers containing acrylic monomers as structural units. Examples include styrene acrylic resins such as those which contain carboxy groups and are produced by copolymerization of aromatic vinyl monomer components and acrylic monomer components. Solvent-free, carboxy group-containing styrene acrylic resins can be suitably used among these.

Among the above-mentioned resins, the rubber composition desirably contains at least one resin selected from the group consisting of styrene resins, coumarone-indene resins, terpene resins, p-t-butylphenol acetylene resins, acrylic resins, dicyclopentadiene resins, C5 resins, C9 resins, and C5/C9 resins in order to better achieve the advantageous effect.

The mechanism for such an advantageous effect achieved by using any of these resins is not clear, but it is believed that these resins may provide good grip performance, thereby resulting in improved overall performance in terms of abrasion resistance, wet grip performance, and bleed resistance.

The ester plasticizers may be any compound that is liquid at room temperature (25°C) and has an ester group. Examples include phthalic acid derivatives, long-chain fatty acid derivatives, phosphoric acid derivatives, sebacic acid derivatives, and adipic acid derivatives. These may be used alone or in combinations of two or more. Phosphoric acid derivatives, sebacic acid derivatives, and adipic acid derivatives are preferred among these, with sebacic acid derivatives being more preferred.

Non-limiting examples of the phthalic acid derivatives include phthalates such as di-2-ethylhexyl phthalate (DOP) and diisodecyl phthalate (DIDP). Non-limiting examples of the long-chain fatty acid derivatives include long-chain fatty acid glycerol esters. Non-limiting examples of the phosphoric acid derivatives include phosphates such as tris(2-ethylhexyl) phosphate (TOP) and tributyl phosphate (TBP). Non-limiting examples of the sebacic acid derivatives include sebacates such as di(2-ethylhexyl) sebacate (DOS) and diisooctyl sebacate (DIOS). Non-limiting examples of the adipic

acid derivatives include adipates such as di(2-ethylhexyl) adipate (DOA) and diisooctyl adipate (DIOA).

Phosphates, sebacates, and adipates are preferred among these, with sebacates being more preferred. Moreover, TOP, DOS, and DOA are preferred as specific compounds, with DOS being more preferred.

The glass transition temperature (Tg) of the ester plasticizers is preferably -110°C or higher, more preferably -100°C or higher, still more preferably -80°C or higher, but it is preferably -20°C or lower, more preferably -40°C or lower, still more preferably -55°C or lower. When the Tg is within the range indicated above, the advantageous effect tends to be more suitably achieved.

Herein, the glass transition temperature is measured in accordance with JIS K 7121 using a differential scanning calorimeter (Q200) available from TA Instruments Japan at a rate of temperature increase of 10°C/min.

The amount of ester plasticizers per 100 parts by mass of the rubber component content is preferably 1 to 20 parts by mass.

For example, the plasticizers may be commercially available from Idemitsu Kosan Co., Ltd., Sankyo Yuka Kogyo K.K., ENEOS Corporation, Olisoy, H&R, Hokoku Corporation, Showa Shell Sekiyu K.K., Fuji Kosan Co., Ltd., The Nisshin Oillio Group., Ltd., Maruzen Petrochemical Co., Ltd., Sumitomo Bakelite Co., Ltd., Yasuhara Chemical Co., Ltd., Tosoh Corporation, Rutgers Chemicals, BASF, Arizona Chemical, Nitto Chemical Co., Ltd., Nippon Shokubai Co., Ltd., Arakawa Chemical Industries, Ltd., Taoka Chemical Co., Ltd., DAIHACHI CHEMICAL INDUSTRY CO., LTD., etc.

The rubber composition may contain a processing aid.

Examples of the processing aid include metal salts (compounds obtained by replacing the hydrogen atoms of acids by metal ions), fatty acid amides, amide esters, and fatty acid esters. These may be used alone or in combinations of two or more. Metal salts and fatty acid amides are preferred among these, with metal salts being more preferred.

Examples of the metals used in the metal salts include alkali metals such as potassium and sodium, and alkaline earth metals such as calcium and barium. Magnesium, zinc, nickel, molybdenum, etc. are also usable. Alkali metals are preferred among these.

Examples of the acids used in the metal salts include fatty acids such as lauric acid, myristic acid, and palmitic acid. Boric acid, carbonic acid, hydrochloric acid, nitric acid, sulfuric acid, etc. are also usable.

The processing aids may be commercially available from KISHIDA CHEMICAL Co., Ltd., KENEI Pharmaceutical Co., Ltd., Struktol, Performance Additives, etc.

The amount of processing aids per 100 parts by mass of the rubber component content in the rubber composition is preferably 1 part by mass or more, more preferably 2 parts by mass or more, still more preferably 3 parts by mass or more, but it is preferably 12 parts by mass or less, more preferably 9 parts by mass or less, still more preferably 6 parts by mass or less. When the amount is within the range indicated above, the advantageous effect tends to be better achieved.

(Other components)

The rubber composition may contain an antioxidant.

Examples of the antioxidant include naphthylamine antioxidants such as phenyl-α-naphthylamine; diphenylamine antioxidants such as octylated diphenylamine and 4,4'-bis(α,α'-dimethylbenzyl)diphenylamine; p-phenylenediamine antioxidants such as N-isopropyl-N'-phenyl-p-phenylenediamine, N-(1,3-dimethylbutyl)-N'-phenyl-p-phenylenediamine, and N,N'-di-2-naphthyl-p-phenylenediamine; quinoline antioxidants such as polymerized 2,2,4-trimethyl-1,2-dihydroquinoline; monophenolic antioxidants such as 2,6-di-t-butyl-4-methylphenol and styrenated phenol; and bis-, tris-, or polyphenolic antioxidants such as tetrakis[methylene-3-(3',5'-di-t-butyl-4'-hydroxyphenyl)propionate]methane. Usable commercial products are available from Seiko Chemical Co., Ltd., Sumitomo Chemical Co., Ltd., Ouchi Shinko Chemical Industrial Co., Ltd., Flexsys, etc. These may be used alone or in combinations of two or more.

The amount of antioxidants per 100 parts by mass of the rubber component content in the rubber composition is preferably 1.0 parts by mass or more, more preferably 3.0 parts by mass or more, still more preferably 4.5 parts by mass or more, but it is preferably 10.0 parts by mass or less, more preferably 8.0 parts by mass or less, still more preferably 6.0 parts by mass or less. When the amount is within the range indicated above, the advantageous effect tends to be better achieved.

The rubber composition may contain a wax.

Any wax may be used, and examples include petroleum waxes such as paraffin waxes and microcrystalline waxes; naturally-occurring waxes such as plant waxes and animal waxes; and synthetic waxes such as polymers of ethylene, propylene, or other similar monomers. Usable commercial products are available from Ouchi Shinko Chemical Industrial Co., Ltd., Nippon Seiro Co., Ltd., Seiko Chemical Co., Ltd., etc. These may be used alone or in combinations of two or more.

The amount of waxes per 100 parts by mass of the rubber component content in the rubber composition is preferably 1.0 parts by mass or more, more preferably 2.0 parts by mass or more, still more preferably 2.5 parts by mass or more, but it is preferably 10.0 parts by mass or less, more preferably 6.0 parts by mass or less, still more preferably 5.0 parts by mass or less. When the amount is within the range indicated above, the advantageous effect tends to be better

achieved.

The rubber composition may contain stearic acid.

Conventional stearic acid may be used. Usable commercial products are available from NOF Corporation, Kao Corporation, FUJIFILM Wako Pure Chemical Corporation, Chiba Fatty Acid Co., Ltd., etc. These may be used alone or in combinations of two or more.

The amount of stearic acid per 100 parts by mass of the rubber component content in the rubber composition is preferably 1.0 parts by mass or more, more preferably 3.0 parts by mass or more, still more preferably 4.0 parts by mass or more, but it is preferably 10.0 parts by mass or less, more preferably 6.0 parts by mass or less. When the amount is within the range indicated above, the advantageous effect tends to be better achieved.

The rubber composition may contain sulfur.

Examples of the sulfur include those commonly used as crosslinking agents in the rubber industry, such as powdered sulfur, precipitated sulfur, colloidal sulfur, insoluble sulfur, highly dispersible sulfur, and soluble sulfur. Usable commercial products are available from Tsurumi Chemical Industry Co., Ltd., Karuizawa sulfur Co., Ltd., Shikoku Chemicals Corporation, Flexsys, Nippon Kanryu Industry Co., Ltd., Hosoi Chemical Industry Co., Ltd., etc. These may be used alone or in combinations of two or more.

The amount of sulfur per 100 parts by mass of the rubber component content in the rubber composition is preferably 0.5 parts by mass or more, more preferably 1.0 parts by mass or more, still more preferably 1.5 parts by mass or more, but it is preferably 3.5 parts by mass or less, more preferably 2.8 parts by mass or less, still more preferably 2.5 parts by mass or less. When the amount is within the range indicated above, the advantageous effect tends to be better achieved.

The rubber composition may contain a vulcanization accelerator.

Examples of the vulcanization accelerator include thiazole vulcanization accelerators such as 2-mercaptobenzothiazole and di-2-benzothiazolyl disulfide; thiuram vulcanization accelerators such as tetramethylthiuram disulfide (TMTD) and tetrakis(2-ethylhexyl)thiuram disulfide (TOT-N); sulfenamide vulcanization accelerators such as N-cyclohexyl-2-benzothiazylsulfenamide (CBS), N-tert-butyl-2-benzothiazolylsulfenamide (TBBS), N-oxyethylene-2-benzothiazole sulfenamide, and N,N'-diisopropyl-2-benzothiazole sulfenamide; and guanidine vulcanization accelerators such as diphenylguanidine, diorthotolylguanidine, and orthotolylbiguanidine. Usable commercial products are available from Sumitomo Chemical Co., Ltd., Ouchi Shinko Chemical Industrial Co., Ltd., etc. These may be used alone or in combinations of two or more.

The amount of vulcanization accelerators per 100 parts by mass of the rubber component content in the rubber composition is preferably 1.0 parts by mass or more, more preferably 3.0 parts by mass or more, still more preferably 5.0 parts by mass or more, but it is preferably 10.0 parts by mass or less, more preferably 8.0 parts by mass or less, still more preferably 7.0 parts by mass or less. When the amount is within the range indicated above, the advantageous effect tends to be better achieved.

In addition to the above-mentioned components, the rubber composition may further contain additives commonly used in the tire industry, such as organic peroxides. The amounts of these additives are each preferably 0.1 to 200 parts by mass per 100 parts by mass of the rubber component content.

The rubber composition may be prepared by known methods. For example, it may be prepared by kneading the above-mentioned components using a rubber kneading machine such as an open roll mill or a Banbury mixer and then vulcanizing the kneaded mixture.

The kneading conditions are as follows. In a base kneading step of kneading additives other than vulcanizing agents and vulcanization accelerators, the kneading temperature is usually 50°C to 200°C, preferably 80°C to 190°C, and the kneading time is usually 30 seconds to 30 minutes, preferably 1 minute to 30 minutes. In a final kneading step of kneading vulcanizing agents and vulcanization accelerators, the kneading temperature is usually 100°C or lower, preferably from room temperature to 80°C. Then, the composition obtained after kneading vulcanizing agents and vulcanization accelerators is usually vulcanized by press vulcanization, for example. The vulcanization temperature is usually 120°C to 200°C, preferably 140°C to 180°C.

The rubber composition can be used in a tread of a tire.

The present invention may be applied to a tire such as a pneumatic tire or a non-pneumatic tire, preferably a pneumatic tire. In particular, the tire may be suitably used as a summer tire, winter tire (e.g., studless tire, cold weather tire, snow tire, studded tire), or all-season tire, particularly a summer tire or winter tire. Moreover, the tire may be used as a tire for passenger cars, large passenger cars, large SUVs, heavy duty vehicles such as trucks and buses, light trucks, or motorcycles, or as a racing tire (high performance tire), etc. Among these, the tire is desirably used as a tire for passenger cars.

The tire can be produced from the above-described rubber composition by usual methods. For example, an unvulcanized rubber composition containing various materials may be extruded into the shape of a tread and then formed together with other tire components on a tire building machine in a usual manner to build an unvulcanized tire, which may then be heated and pressurized in a vulcanizer to produce a tire.

The tire of the present invention includes a tread including the rubber composition that contains a rubber component and a branched conjugated diene polymer, and satisfies the following relationship (1):

Relationship (1)

$$0.25 < A \leq 1.50$$

wherein A is defined by $A = 42.9/\sqrt{\alpha} + 0.14$ wherein $\alpha$ represents the weight average molecular weight of the branched conjugated diene polymer.

The lower limit of A is preferably 0.28 or more, more preferably 0.30 or more, still more preferably 0.39 or more, further preferably 0.40 or more, further preferably 0.44 or more, further preferably 0.50 or more, further preferably 0.53 or more, further preferably 0.57 or more, further preferably 0.59 or more, while the upper limit is preferably 1.20 or less, more preferably 0.82 or less, still more preferably 0.80 or less, further preferably 0.75 or less, further preferably 0.70 or less. When A is within the range indicated above, the advantageous effect tends to be better achieved.

The mechanism for such an advantageous effect achieved by adjusting A within a predetermined range, particularly $0.30 \leq A \leq 0.80$, is not clear, but it is believed that in this case, the compatibility with rubbers may be improved such that the single-domain phases may be decreased to improve abrasion resistance, and the decrease of the single-domain phases may reduce bleeding of the branched conjugated diene polymer and improve bleed resistance, thereby resulting in improved overall performance in terms of abrasion resistance, wet grip performance, and bleed resistance.

The tire includes a tread including the rubber composition and satisfies the following relationship (2):

Relationship (2)

$$A \times S \leq 27.0$$

wherein A is defined by $A = 42.9/\sqrt{\alpha} + 0.14$ wherein $\alpha$ represents the weight average molecular weight of the branched conjugated diene polymer; and S represents the groove area ratio (%) of the ground contact surface of the tread.

The upper limit of the value of $A \times S$ is preferably 26.6 or less, more preferably 26.1 or less, still more preferably 25.5 or less, further preferably 25.0 or less, further preferably 23.1 or less, further preferably 23.0 or less, further preferably 22.2 or less, particularly preferably 22.0 or less. The lower limit is not limited, but it is preferably 10.0 or more, more preferably 10.8 or more, still more preferably 15.0 or more, further preferably 15.1 or more, further preferably 17.3 or more, further preferably 17.8 or more, further preferably 18.0 or more. When the value is within the range indicated above, the advantageous effect tends to be better achieved.

The mechanism for such an advantageous effect achieved by adjusting the value of $A \times S$ to a predetermined value or less, particularly $A \times S \leq 22.0$, is not clear, but it is believed that in this case, sufficient grip performance may be ensured and at the same time wear may be reduced, resulting in improved wet grip performance and abrasion resistance and thus in improved overall performance in terms of abrasion resistance, wet grip performance, and bleed resistance.

In the tire, the groove area ratio S (%) of the ground contact surface of the tread is preferably 50% or less.

The groove area ratio S is preferably 45% or less, more preferably 44% or less, still more preferably 43% or less, further preferably 41% or less, further preferably 39% or less. The lower limit of the groove area ratio is preferably 10% or more, more preferably 15% or more, still more preferably 20% or more, further preferably 30% or more, further preferably 33% or more, further preferably 35% or more. When the groove area ratio S is within the range indicated above, the advantageous effect tends to be better achieved.

The mechanism for such an advantageous effect achieved by adjusting S within a predetermined range, particularly $15\% \leq S \leq 45\%$, is not clear, but it is believed that in this case, sufficient grip performance may be ensured and at the same time wear may be reduced, resulting in improved wet grip performance and abrasion resistance and thus in improved overall performance in terms of abrasion resistance, wet grip performance, and bleed resistance.

The mechanism for the above-mentioned advantageous effect is not clear, but it is believed to be as follows.

A branched conjugated diene polymer at least containing a branched conjugated diene, butadiene, and styrene as structural units may provide improved compatibility with rubber components such as polybutadiene rubbers and styrene-butadiene rubbers. Particularly, when the branched conjugated diene polymer is controlled to satisfy the relationship (1): $0.25 < A \leq 1.50$, i.e., to adjust the weight average molecular weight of the branched conjugated diene polymer within a predetermined range, the single-domain phases may be decreased to improve abrasion resistance. With the decrease of the single-domain phases, the bleeding of the branched conjugated diene polymer may also be reduced, resulting in improved bleed resistance.

The branched conjugated diene polymer containing styrene as a structural unit may achieve high Tg, thereby improving wet grip performance.

When the value of A and the groove area ratio S (%) are controlled to satisfy the relationship (2): $A \times S \leq 27.0$, i.e., to increase the ground contact surface of the tread (or reduce the groove area ratio) while reducing the weight average

molecular weight of the branched conjugated diene polymer, grip performance may be ensured and at the same time wear may be reduced, resulting in improved wet grip performance and abrasion resistance.

The above-described mechanism is believed to improve overall performance in terms of abrasion resistance, wet grip performance, and bleed resistance.

Here, the groove area ratio S (negative ratio) of the ground contact surface of the tread refers to the ratio of the total groove area within the ground contact surface relative to the total area of the ground contact surface and is determined as described below.

Herein, when the tire is a pneumatic tire, the groove area ratio S is calculated from the contact patch of the tire under conditions including a normal rim, a normal internal pressure, and a normal load. When the tire is a non-pneumatic tire, the groove area ratio S can be similarly determined without the need of a normal internal pressure.

The term "normal rim" refers to a rim specified for each tire by the standard in a standard system including standards according to which tires are provided, and may be, for example, the standard rim in JATMA, "design rim" in TRA, or "measuring rim" in ETRTO.

The term "normal internal pressure" refers to an air pressure specified for each tire by the standard and may be the maximum air pressure in JATMA, the maximum value shown in Table "TIRE LOAD LIMITS AT VARIOUS COLD INFLATION PRESSURES" in TRA, or "inflation pressure" in ETRTO.

The term "normal load" refers to a load specified for each tire by the standard and may be the maximum load capacity in JATMA, the maximum value shown in Table "TIRE LOAD LIMITS AT VARIOUS COLD INFLATION PRESSURES" in TRA, or "load capacity" in ETRTO.

The contact patch may be determined by mounting the tire on a normal rim, applying a normal internal pressure to the tire, and allowing the tire to stand at 25°C for 24 hours, followed by applying black ink to the tread surface of the tire and pressing the tread surface against a cardboard at a normal load (camber angle: 0°) for transfer to the cardboard.

The transfer may be performed on the tire in five positions, each rotated by 72° in the circumferential direction. Namely, five contact patches may be determined.

The contour points of each of the five contact patches are smoothly connected to draw a figure, the area of which is defined as the total area, and the transferred area as a whole constitutes the ground contact area. The average of the results of the five positions is determined and then the groove area ratio S (%) is calculated by the equation: [1 - {Average of areas of five contact patches transferred to cardboard (parts with black ink)}/{Average of five total areas transferred to cardboard (figures obtained from contour points)}] $\times$ 100 (%).

Here, the average length or area is the simple average of the five values.

The thickness G (mm) of the tread of the tire is preferably 3.0 mm or more, more preferably 3.5 mm or more, still more preferably 4.0 mm or more, further preferably 6.0 mm or more. The upper limit is not limited, but it is preferably 15.0 mm or less, more preferably 10.0 mm or less, still more preferably 9.0 mm or less, particularly preferably 8.0 mm or less. When the thickness is within the range indicated above, the advantageous effect tends to be better achieved.

The mechanism for such an advantageous effect is not clear, but it is believed that adjusting the thickness of the tread within a predetermined range may improve rigidity to improve abrasion resistance and wet grip performance, and such a thickness may also improve bleed resistance, thereby resulting in improved overall performance in terms of abrasion resistance, wet grip performance, and bleed resistance.

The thickness G of the tread in the present invention refers to the thickness of the tread measured on the equator in a cross-section of the tread taken in the tire radial direction. Specifically, the thickness G of the tread is the distance from the tread surface to the interface of the belt-reinforcing layer, belt layer, carcass layer, or other reinforcing layer containing a fiber material, which is outermost with respect to the tire. Here, when the tread has a groove on the tire equator, it is the linear distance from the intersection of the equator and a straight line connecting the outermost edges of the groove with respect to the tire radial direction.

FIG. 1 is a meridional cross-sectional view showing a part of a tire 1 according to an embodiment of the present invention. It should be noted that the tire of the present invention is not limited to the embodiments described below.

In FIG. 1, the vertical direction corresponds to the radial direction of the tire (hereinafter, also referred to simply as tire radial direction or radial direction), the horizontal direction corresponds to the axial direction of the tire (hereinafter, also referred to simply as tire axial direction or axial direction), and the direction perpendicular to the paper corresponds to the circumferential direction of the tire (hereinafter, also referred to simply as tire circumferential direction or circumferential direction). The present tire 1 has a shape that is horizontally substantially symmetrical about the center line CL in FIG. 1. The center line CL is also referred to as a tread center line and represents the equator EQ of the tire 1.

The present tire 1 includes a tread 2, a sidewall 3, a bead 4, a carcass 5, and a belt 6. The present tire 1 is a tubeless tire.

The tread portion 2 includes a tread face 7. The tread face 7 has a radially outwardly convex shape in a cross-section taken in the meridional direction of the tire 1. The tread face 7 will contact the road surface. The present tread face 7 has a plurality of circumferentially extending grooves 8 carved therein. The grooves 8 define a tread pattern. The external part of the tread 2 with respect to the tire axial direction (tire width direction) is referred to as a shoulder portion 15. The

sidewall 3 extends substantially inwardly in the radial direction from the end of the tread 2. The sidewall 3 is formed of a crosslinked rubber or the like.

As shown in FIG. 1, the bead 4 is located radially substantially inward from the sidewall 3. The bead 4 includes a core 10 and an apex 11 radially outwardly extending from the core 10. The core 10 has a ring shape along the circumferential direction of the tire. The core 10 is formed of a wound inextensible wire. Typically, a steel wire is used in the core 10. The apex 11 is radially outwardly tapered. The apex 11 is formed of a very hard crosslinked rubber or the like.

In the present embodiment, the carcass 5 is formed of a carcass ply 12. The carcass ply 12 extends between the opposite beads 4 along the inner sides of the tread 2 and the sidewalls 3. The carcass ply 12 is folded around the core 10 from the inside to the outside in the tire axial direction. Though not shown, the carcass ply 12 is formed of a parallel array of cords and a topping rubber. The absolute value of the angle of each cord relative to the equator EQ (CL) is usually 70° to 90°. In other words, the present carcass 5 has a radial structure.

In the present embodiment, the belt 6 is located radially outward of the carcass 5. The belt 6 is stacked on the carcass 5. The belt 6 reinforces the carcass 5. The belt 6 may be formed of an inner layer belt 13 and an outer layer belt 14. In the present embodiment, the widths of the belts 13 and 14 are different from each other.

Though not shown, each of the inner layer belt 13 and the outer layer belt 14 is usually formed of a parallel array of cords and a topping rubber. Each cord is desirably inclined with respect to the equator EQ. Desirably, the cord of the inner layer belt 13 is inclined in a direction opposite to the inclination of the cord of the outer layer belt 14.

Though not shown, an embodiment may also be used in which a band is stacked on the outer side of the belt 6 with respect to the tire radial direction. The band is wider than the belt 6. The band may be formed of a cord and a topping rubber. The cord is spirally wound. The belt is restrained by the cord, so that the belt 6 is inhibited from lifting. The cord is desirably formed of organic fibers. Preferred examples of the organic fibers include nylon fibers, polyester fibers, rayon fibers, polyethylene naphthalate fibers, and aramid fibers.

Though not shown, an embodiment may also be used in which an edge band is provided outward of the belt 6 in the tire radial direction and near the widthwise end (edge portion) of the belt 6. Like the band, the edge band may be formed of a cord and a topping rubber. An exemplary edge band may be stacked on the upper surface of a step 20 of the wider inner layer belt 13. In an exemplary embodiment, the cord in the edge band is inclined in the same direction as the direction of the cord in the narrower outer layer belt 14 and is biased relative to the cord in the wider inner layer belt 13.

Though not shown, an embodiment may also be used in which a cushion rubber layer is stacked on the carcass 5 near the widthwise end of the belt 6. In an exemplary embodiment, the cushion layer is formed of a soft crosslinked rubber. The cushion layer absorbs stress at the belt edge.

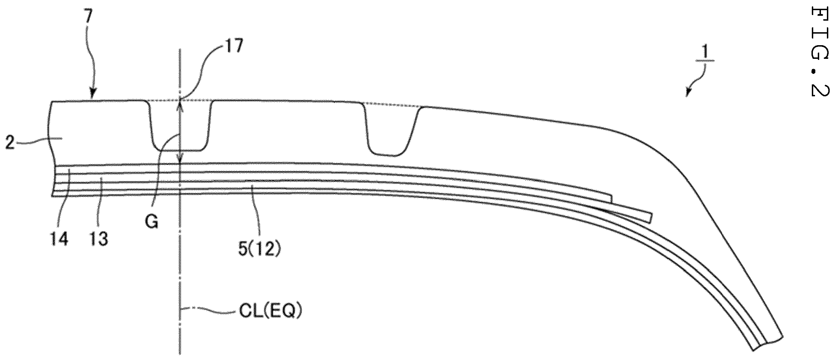

FIG. 2 shows a cross-section of the tread 2 of the present tire 1 taken along a plane including the tire axis. In FIGS. 1 and 2, a crown center 17 located at the equator EQ corresponds to "the equator in a cross-section of the tread 2 taken in the tire radial direction".

In the tire 1, the thickness G of the tread 2 (the thickness G of the tread 2 measured on the equator in a cross-section of the tread 2 taken in the tire radial direction) refers to the distance from the tread face 7 (which corresponds to a straight line connecting the outermost edges of the groove 8 with respect to the tire radial direction as the tire 1 has the groove on the tire equator) to the interface of the outer layer belt 14, which is outermost with respect to the tire, as measured on the equator in a cross-section taken along a plane including the tire axis.

Moreover, in the tire 1, the tread 2 includes a tread rubber composition which contains a rubber component and a branched conjugated diene polymer, and the branched conjugated diene polymer is a copolymer at least containing a branched conjugated diene, butadiene, and styrene as structural units and satisfies the relationship (1): $0.25 < A \leq 1.50$ wherein A is defined by $A = 42.9/\sqrt{\alpha} + 0.14$ wherein $\alpha$ represents the weight average molecular weight of the branched conjugated diene polymer. Further, A and the groove area ratio S (%) of the ground contact surface of the tread 2 satisfy the relationship (2): $A \times S \leq 27.0$.

EXAMPLES

Examples (working examples) which are considered preferable to implement the present invention are described below although he scope of the invention is not limited to the examples.

Tires produced with the chemicals listed below according to the formulations varied as shown in Table 1 were examined. The results calculated according to the below-described evaluations are shown in Table 1.

(Rubber component)

SBR 1: Tufdene 3830 (styrene content: 36% by mass, butadiene content: 64% by mass, Mw: 420,000, oil content: 37.5 parts by mass per 100 parts by mass of rubber solid content) available from Asahi Kasei Corporation

SBR 2: JSR1723 (styrene content: 24% by mass, butadiene content: 76% by mass, oil content: 37.5 parts by mass per 100 parts by mass of rubber solid content) available from JSR Corporation
SBR 3: JSR1502 (styrene content: 25% by mass, butadiene content: 75% by mass) available from JSR Corporation
BR: BR150B (cis content: 95% by mass or higher) available from Ube Corporation

(Chemicals other than rubber component)

Oil: Diana Process PA32 (mineral oil) available from Idemitsu Kosan Co., Ltd.
Carbon black: N134 ($N_2SA$: 148 $m^2/g$) available from Cabot Japan K.K.
Silica 1: Ultrasil VN3 ($N_2SA$: 175 $m^2/g$) available from Degussa
Silica 2: ZEOSIL 1115MP ($N_2SA$: 115 $m^2/g$) available from Solvay
Silica 3: 9100Gr ($N_2SA$: 235 $m^2/g$) available from Degussa
Silane coupling agent: NXT (3-octanoylthiopropyltriethoxysilane) available from Momentive
Resin: Sylvatraxx 4401 (copolymer of α-methylstyrene and styrene, softening point: 85°C) available from Arizona Chemical
Polyisoprene: LIR50 (Mw: 54000) available from KURARAY CO., LTD.
Styrene-butadiene copolymer: RICON 100 (styrene content: 23% by mass, butadiene content: 77% by mass, Mw: 4500) available from Cray Valley
Styrene-farnesene copolymer: Septon 1020 (styrene content: 36% by mass, farnesene content: 64% by mass, Mw: 1000) available from KURARAY CO., LTD.
Copolymer 1: butadiene-farnesene copolymer obtained in Production Example 1 described below
Copolymer 2: styrene-butadiene-farnesene copolymer obtained in Production Example 2 described below
Copolymer 3: styrene-butadiene-farnesene copolymer obtained in Production Example 3 described below
Copolymer 4: styrene-butadiene-farnesene copolymer obtained in Production Example 4 described below
Copolymer 5: styrene-butadiene-farnesene copolymer obtained in Production Example 5 described below
Copolymer 6: styrene-butadiene-farnesene copolymer obtained in Production Example 6 described below
Copolymer 7: styrene-butadiene-farnesene copolymer obtained in Production Example 7 described below
Copolymer 8: styrene-butadiene-farnesene copolymer obtained in Production Example 8 described below
Copolymer 9: styrene-butadiene-farnesene copolymer obtained in Production Example 9 described below
Copolymer 10: styrene-butadiene-farnesene copolymer obtained in Production Example 10 described below
Copolymer 11: styrene-butadiene-farnesene copolymer obtained in Production Example 11 described below
Copolymer 12: styrene-butadiene-farnesene copolymer obtained in Production Example 12 described below
Copolymer 13: styrene-butadiene-farnesene copolymer obtained in Production Example 13 described below
Wax: Ozoace 0355 available from Nippon Seiro Co., Ltd.
Antioxidant 1: NOCRAC 6C (N-(1,3-dimethylbutyl)-N'-phenyl-p-phenylenediamine) available from Ouchi Shinko Chemical Industrial Co., Ltd.
Antioxidant 2: NOCRAC 224 (polymerized 2,2,4-trimethyl-1,2-dihydroquinoline) available from Ouchi Shinko Chemical Industrial Co., Ltd.
Stearic acid: stearic acid "Tsubaki" available from NOF Corporation
Zinc oxide: zinc oxide #1 available from Mitsui Mining & Smelting Co., Ltd.
Sulfur: HK-200-5 (5% by mass oil-containing powdered sulfur) available from Hosoi Chemical Industry Co., Ltd.
Vulcanization accelerator 1: NOCCELER CZ (N-cyclohexyl-2-benzothiazolylsulfenamide) available from Ouchi Shinko Chemical Industrial Co., Ltd.
Vulcanization accelerator 2: NOCCELER D (1,3-diphenylguanidine, DPG) available from Ouchi Shinko Chemical Industrial Co., Ltd.

The following materials are used in the production examples described below.

Butadiene: 1,3-butadiene available from Tokyo Chemical Industry Co., Ltd.
Styrene: styrene available from Tokyo Chemical Industry Co., Ltd.
Cyclohexane: cyclohexane available from Tokyo Chemical Industry Co., Ltd.
Tetrahydrofuran: tetrahydrofuran available from Tokyo Chemical Industry Co., Ltd.
β-Farnesene: trans-β-farnesene available from Tokyo Chemical Industry Co., Ltd.
Methanol: methanol available from Tokyo Chemical Industry Co., Ltd.
sec-Butyllithium: butyllithium (10.5% by mass solution in cyclohexane, about 2.3 mol/L) available from Tokyo Chemical Industry Co., Ltd.

<Method for measuring weight average molecular weight>

The weight average molecular weight of each polymer is determined by gel permeation chromatography (GPC) relative to polystyrene standards. The measurement device and conditions used are as follows.

Device: GPC device "HLC-8320" available from Tosoh Corporation
Separation column: column "TSKgel SuperHZM-M" available from Tosoh Corporation
Eluent: tetrahydrofuran
Flow rate of eluent: 0.7 ml/min
Sample concentration: 5 mg/10 ml
Column temperature: 40°C

<Production of copolymer>

(Production Example 1: Production of butadiene/farnesene copolymer)

A dried and nitrogen-purged pressure-resistant vessel is charged with 1140 g of cyclohexane as a solvent and 156 g of sec-butyllithium (10.5% by mass solution in cyclohexane) as an initiator, and the temperature is raised to 50°C. Thereafter, 3.5 g of tetrahydrofuran is added, and 1800 g of a previously prepared mixture of butadiene and β-farnesene (720 g of butadiene and 1080 g of β-farnesene are mixed in a cylinder) is added at 10 ml/min, followed by polymerization for one hour.
The thus prepared polymerization reaction solution is treated with methanol and washed with water.
After the washing, water is separated from the polymerization reaction solution, followed by drying at 70°C for 12 hours to obtain copolymer 1 having the physical properties shown in Table 1.

(Production Example 2: Production of styrene/butadiene/farnesene copolymer)

A dried and nitrogen-purged pressure-resistant vessel is charged with 1140 g of cyclohexane as a solvent and 12 g of sec-butyllithium (10.5% by mass solution in cyclohexane) as an initiator, and the temperature is raised to 50°C. Thereafter, 3.5 g of tetrahydrofuran is added, and 1800 g of a previously prepared mixture of styrene, butadiene, and β-farnesene (180 g of styrene, 360 g of butadiene, and 1260 g of β-farnesene are mixed in a cylinder) is added at 10 ml/min, followed by polymerization for two hours.
The thus prepared polymerization reaction solution is treated with methanol and washed with water.
After the washing, water is separated from the polymerization reaction solution, followed by drying at 70°C for 12 hours to obtain copolymer 2 having the physical properties shown in Table 1.

(Production Example 3: Production of styrene/butadiene/farnesene copolymer)

A dried and nitrogen-purged pressure-resistant vessel is charged with 1140 g of cyclohexane as a solvent and 156 g of sec-butyllithium (10.5% by mass solution in cyclohexane) as an initiator, and the temperature is raised to 50°C. Thereafter, 3.5 g of tetrahydrofuran is added, and 1800 g of a previously prepared mixture of styrene, butadiene, and β-farnesene (180 g of styrene, 360 g of butadiene, and 1260 g of β-farnesene are mixed in a cylinder) is added at 10 ml/min, followed by polymerization for one hour.
The thus prepared polymerization reaction solution is treated with methanol and washed with water.
After the washing, water is separated from the polymerization reaction solution, followed by drying at 70°C for 12 hours to obtain copolymer 3 having the physical properties shown in Table 1.

(Production Example 4: Production of styrene/butadiene/farnesene copolymer)

Copolymer 4 having the physical properties shown in Table 1 is produced as in Production Example 3, except that the amount of sec-butyllithium (10.5% by mass solution in cyclohexane) is changed to 74 g.

(Production Example 5: Production of styrene/butadiene/farnesene copolymer)

Copolymer 5 having the physical properties shown in Table 1 is produced as in Production Example 3, except that the amount of sec-butyllithium (10.5% by mass solution in cyclohexane) is changed to 52 g.

(Production Example 6: Production of styrene/butadiene/farnesene copolymer)

Copolymer 6 having the physical properties shown in Table 1 is produced as in Production Example 3, except that the amount of sec-butyllithium (10.5% by mass solution in cyclohexane) is changed to 346 g.

(Production Example 7: Production of styrene/butadiene/farnesene copolymer)

Copolymer 7 having the physical properties shown in Table 1 is produced as in Production Example 3, except that the previously prepared mixture of styrene, butadiene, and β-farnesene is changed to a mixture of 36 g of styrene, 324 g of butadiene, and 1440 g of β-farnesene.

(Production Example 8: Production of styrene/butadiene/farnesene copolymer)

Copolymer 8 having the physical properties shown in Table 1 is produced as in Production Example 3, except that the previously prepared mixture of styrene, butadiene, and β-farnesene is changed to a mixture of 360 g of styrene, 360 g of butadiene, and 1080 g of β-farnesene.

(Production Example 9: Production of styrene/butadiene/farnesene copolymer)

Copolymer 9 having the physical properties shown in Table 1 is produced as in Production Example 3, except that the previously prepared mixture of styrene, butadiene, and β-farnesene is changed to a mixture of 450 g of styrene, 630 g of butadiene, and 720 g of β-farnesene.

(Production Example 10: Production of styrene/butadiene/farnesene copolymer)

Copolymer 10 having the physical properties shown in Table 1 is produced as in Production Example 3, except that the previously prepared mixture of styrene, butadiene, and β-farnesene is changed to a mixture of 630 g of styrene, 450 g of butadiene, and 720 g of β-farnesene.

(Production Example 11: Production of styrene/butadiene/farnesene copolymer)

Copolymer 11 having the physical properties shown in Table 1 is produced as in Production Example 2, except that the amount of sec-butyllithium (10.5% by mass solution in cyclohexane) is changed to 15 g.

(Production Example 12: Production of styrene/butadiene/farnesene copolymer)

Copolymer 12 having the physical properties shown in Table 1 is produced as in Production Example 3, except that the amount of sec-butyllithium (10.5% by mass solution in cyclohexane) is changed to 434 g.

(Production Example 13: Production of styrene/butadiene/farnesene copolymer)

Copolymer 13 having the physical properties shown in Table 1 is produced as in Production Example 3, except that the amount of sec-butyllithium (10.5% by mass solution in cyclohexane) is changed to 124 g.

[Table 1]

| | Polymer | Mass ratio (%) | | | Mw |
|---|---|---|---|---|---|
| | | Styrene | Butadiene | β-Farnesene | |
| Copolymer 1 | Butadiene/β-Farnesene random copolymer | 0 | 40 | 60 | 9000 |
| Copolymer 2 | Styrene/Butadiene/β-Farnesene random copolymer | 10 | 20 | 70 | 130000 |
| Copolymer 3 | Styrene/Butadiene/β-Farnesene random copolymer | 10 | 20 | 70 | 9000 |
| Copolymer 4 | Styrene/Butadiene/β-Farnesene random copolymer | 10 | 20 | 70 | 20000 |

(continued)

| | Polymer | Mass ratio (%) | | | Mw |
|---|---|---|---|---|---|
| | | Styrene | Butadiene | β-Farnesene | |
| Copolymer 5 | Styrene/Butadiene/β-Farnesene random copolymer | 10 | 20 | 70 | 30000 |
| Copolymer 6 | Styrene/Butadiene/β-Farnesene random copolymer | 10 | 20 | 70 | 5000 |
| Copolymer 7 | Styrene/Butadiene/β-Farnesene random copolymer | 2 | 18 | 80 | 9000 |
| Copolymer 8 | Styrene/Butadiene/β-Farnesene random copolymer | 20 | 20 | 60 | 9000 |
| Copolymer 9 | Styrene/Butadiene/β-Farnesene random copolymer | 25 | 35 | 40 | 9000 |
| Copolymer 10 | Styrene/Butadiene/β-Farnesene random copolymer | 35 | 25 | 40 | 9000 |
| Copolymer 11 | Styrene/Butadiene/β-Farnesene random copolymer | 10 | 20 | 70 | 100000 |
| Copolymer 12 | Styrene/Butadiene/β-Farnesene random copolymer | 10 | 20 | 70 | 4000 |
| Copolymer 13 | Styrene/Butadiene/β-Farnesene random copolymer | 10 | 20 | 70 | 12000 |

<Production of test tire>

The chemicals other than sulfur and vulcanization accelerators in the formulation amounts shown in Table 2 or 3 are kneaded in a 16 L Banbury mixer (Kobe Steel, Ltd.) for four minutes at 160°C to give a kneaded mixture.

Then, sulfur and a vulcanization accelerator are added to the kneaded mixture, and they are kneaded in an open roll mill at 80°C for four minutes to give an unvulcanized polymer composition.

The unvulcanized polymer composition is formed into the shape of a tread and assembled with other tire components on a tire building machine to build an unvulcanized tire. Subsequently, the unvulcanized tire is vulcanized at 170°C for 12 minutes to produce a test tire (size: 195/65R15, specification: shown in Table 2 or 3).

<Abrasion resistance>

The test tires of each example are mounted on a car, and the car run for 10,000 km. Then, the groove depth in the tread portion is measured to calculate the abrasion loss of the tread portion, which is expressed as an index relative to the abrasion loss of Comparative Example 1 taken as 100. A higher index indicates a lower abrasion loss and thus better abrasion resistance.

<Wet grip performance>

The test tires of each example are mounted on a car. The braking distance of the car with an initial speed of 100 km/h on a wet asphalt road is determined and expressed as an index relative to the breaking distance of Comparative Example 1 taken as 100. A higher index indicates a shorter braking distance and thus better wet grip performance.

<Acetone extractable content (AE content)>

Rubber specimens are cut out of the tread in each test tire, and the amount of matter extractable with acetone from each specimen is measured by a method for measuring the acetone extractable content in accordance with JIS K 6229. The acetone extractable content of each rubber specimen is expressed as an index relative to the acetone extractable content of Comparative Example 1 as standard. A higher index indicates a lower acetone extractable content and thus better bleed resistance. Acetone extractable content (% by mass) = ((Mass of sample before extraction) - (Mass of sample after extraction))/(Mass of sample before extraction) × 100

<Overall performance>

The average of the abrasion resistance (index), the wet grip performance (index), and the acetone extractable content (index) is evaluated as the overall performance in terms of abrasion resistance, wet grip performance, and bleed resistance. A higher index indicates better overall performance.

[Table 2]

| | | Comp. Ex. 1 | Comp. Ex. 2 | Comp. Ex. 3 | Comp. Ex. 4 | Comp. Ex. 5 | Comp. Ex. 6 |
|---|---|---|---|---|---|---|---|
| Formulation (parts by mass) | SBR1 (styrene content 36%, oil extended with 37.5 parts) | 20 | 20 | 20 | 20 | 20 | 20 |
| | SBR2 (styrene content 24%, oil extended with 37.5 parts) | 30 | 30 | 30 | 30 | 30 | 30 |
| | SBR3 (styrene content 25%) | 20 | 20 | 20 | 20 | 20 | 20 |
| | BR | 30 | 30 | 30 | 30 | 30 | 30 |
| | Oil: Extender oil | 18.75 | 18.75 | 18.75 | 18.75 | 18.75 | 18.75 |
| | Oil: Additional oil (PA32) | 19.25 | 11.25 | 11.25 | 11.25 | 11.25 | 11.25 |
| | Carbon black | 10 | 10 | 10 | 10 | 10 | 10 |
| | Silica 1 | 60 | 60 | 60 | 60 | 60 | 60 |
| | Silica 2 | 10 | 10 | 10 | 10 | 10 | 10 |
| | Silica 3 | 40 | 40 | 40 | 40 | 40 | 40 |
| | Silane coupling agent | 10 | 10 | 10 | 10 | 10 | 10 |
| | Resin | 9 | 9 | 9 | 9 | 9 | 9 |
| | Polyisoprene (Mw : 54000) | | 8 | | | | |
| | Styrene-butadiene copolymer (Mw : 4500) | | | 8 | | | |
| | Styrene-farnesene copolymer (Mw : 950) | | | | 8 | | |
| | Copolymer 1 (Mw : 9000, styrene content 0% by mass) | | | | | 8 | |
| | Copolymer 2 (Mw : 130000, styrene content 10% by mass) | | | | | | 8 |
| | Copolymer 3 (Mw : 9000, styrene content 10% by mass) | | | | | | |
| | Copolymer 4 (Mw : 20000, styrene content 10% by mass) | | | | | | |
| | Copolymer 5 (Mw : 30000, styrene content 10% by mass) | | | | | | |
| | Copolymer 6 (Mw : 5000, styrene content 10% by mass) | | | | | | |
| | Copolymer 7 (Mw : 9000, styrene content 2% by mass) | | | | | | |
| | Copolymer 8 (Mw : 9000, styrene content 20% by mass) | | | | | | |
| | Copolymer 9 (Mw : 9000, styrene content 25% by mass) | | | | | | |
| | Copolymer 10 (Mw : 9000, styrene content 35% by mass) | | | | | | |
| | Copolymer 11 (Mw : 100000, styrene content 10% by mass) | | | | | | |
| | Copolymer 12 (Mw : 4000, styrene content 10% by mass) | | | | | | |
| | Copolymer 13 (Mw : 12000, styrene content 10% by mass) | | | | | | |
| | Polymer styrene content | 0 | 0 | 23 | 36 | 10 | 10 |
| | Polymer butadiene content | 0 | 0 | 77 | 0 | 20 | 20 |
| | Polymer farnesene content | 0 | 0 | 0 | 64 | 70 | 70 |
| | Wax | 2.5 | 2.5 | 2.5 | 2.5 | 2.5 | 2.5 |
| | Antioxidant 1 | 3 | 3 | 3 | 3 | 3 | 3 |
| | Antioxidant 2 | 1.5 | 1.5 | 1.5 | 1.5 | 1.5 | 1.5 |
| | Stearic acid | 3 | 3 | 3 | 3 | 3 | 3 |
| | Zinc oxide | 3 | 3 | 3 | 3 | 3 | 3 |
| | Sulfur | 1.5 | 1.5 | 1.5 | 1.5 | 1.5 | 1.5 |
| | Vulcanization accelerator 1 | 2.5 | 2.5 | 2.5 | 2.5 | 2.5 | 2.5 |
| | Vulcanization accelerator 2 | 2.5 | 2.5 | 2.5 | 2.5 | 2.5 | 2.5 |
| Specification | α (Mw of branched conjugated diene polymer) | - | 54000 | 4500 | 1000 | 150000 | 150000 |
| | $A = 42.9/\sqrt{\alpha} + 0.14$ | - | 0.14 | 0.14 | 1.50 | 0.25 | 0.25 |
| | Groove area ratio S (%) | 39 | 39 | 39 | 39 | 39 | 40 |
| | A × S | - | 5.5 | 5.5 | 58.4 | 9.8 | 10.0 |
| | 0.013 × butadiene unit content + 0.071 × styrene unit content | 0.00 | 0.00 | 2.63 | 2.56 | 0.97 | 0.97 |
| | Average styrene content of SBR (% by mass) | 19.4 | 19.4 | 19.4 | 19.4 | 19.4 | 19.4 |
| | Thickness G (mm) of tread | 6.0 | 6.0 | 6.0 | 6.0 | 6.0 | 6.0 |
| Evaluation | (a) Abrasion resistance (index) | 100 | 83 | 94 | 90 | 79 | 79 |
| | (b) Wet grip performance (index) | 100 | 94 | 105 | 94 | 88 | 88 |
| | (c) Acetone extractable content (index) | 100 | 114 | 102 | 100 | 114 | 116 |
| | Overall performance (average of (a), (b), and (c)) | 100 | 97 | 100 | 95 | 94 | 94 |

Comp. Ex.: Comparative Example

[Table 3]

| | | Ex. 1 | Ex. 2 | Ex. 3 | Ex. 4 | Ex. 5 | Ex. 6 | Ex. 7 |
|---|---|---|---|---|---|---|---|---|
| Formulation (parts by mass) | SBR 1 (styrene content 36%, oil extended with 37.5 parts) | 20 | 20 | 20 | 20 | 20 | 20 | 20 |
| | SBR 2 (styrene content 24%, oil extended with 37.5 parts) | 30 | 30 | 30 | 30 | 30 | 30 | 30 |
| | SBR 3 (styrene content 25%) | 20 | 20 | 20 | 20 | 20 | 20 | 20 |
| | BR | 30 | 30 | 30 | 30 | 30 | 30 | 30 |
| | Oil Extender oil | 18.75 | 18.75 | 18.75 | 18.75 | 18.75 | 18.75 | 18.75 |
| | Additional oil (PA32) | 11.25 | 11.25 | 11.25 | 11.25 | 11.25 | 11.25 | 11.25 |
| | Carbon black | 10 | 10 | 10 | 10 | 10 | 10 | 10 |
| | Silica 1 | 60 | 60 | 60 | 60 | 60 | 60 | 60 |
| | Silica 2 | 10 | 10 | 10 | 10 | 10 | 10 | 10 |
| | Silica 3 | 40 | 40 | 40 | 40 | 40 | 40 | 40 |
| | Silane coupling agent | 10 | 10 | 10 | 10 | 10 | 10 | 10 |
| | Resin | 9 | 9 | 9 | 9 | 9 | 9 | 9 |
| | Polyisoprene (Mw : 54000) | | | | | | | |
| | Styrene-butadiene copolymer (Mw : 4500) | | | | | | | |
| | Styrene-farnesene copolymer (Mw : 950) | | | | | | | |
| | Copolymer 1 (Mw : 9000, styrene content 0% by mass) | | | | | | | |
| | Copolymer 2 (Mw : 130000, styrene content 10% by mass) | | | | | | | |
| | Copolymer 3 (Mw : 9000, styrene content 10% by mass) | 8 | | | 8 | | 8 | 8 |
| | Copolymer 4 (Mw : 20000, styrene content 10% by mass) | | 8 | | | | | |
| | Copolymer 5 (Mw : 30000, styrene content 10% by mass) | | | 8 | | | | |
| | Copolymer 6 (Mw : 5000, styrene content 10% by mass) | | | | | 8 | | |
| | Copolymer 7 (Mw : 9000, styrene content 2% by mass) | | | | | | | |
| | Copolymer 8 (Mw : 9000, styrene content 20% by mass) | | | | | | | |
| | Copolymer 9 (Mw : 9000, styrene content 25% by mass) | | | | | | | |
| | Copolymer 10 (Mw : 9000, styrene content 35% by mass) | | | | | | | |
| | Copolymer 11 (Mw : 100000, styrene content 10% by mass) | | | | | | | |
| | Copolymer 12 (Mw : 4000, styrene content 10% by mass) | | | | | | | |
| | Copolymer 13 (Mw : 12000, styrene content 10% by mass) | | | | | | | |
| | Polymer styrene content | 10 | 10 | 10 | 10 | 10 | 10 | 10 |
| | Polymer butadiene content | 20 | 20 | 20 | 20 | 20 | 20 | 20 |
| | Polymer farnesene content | 70 | 70 | 70 | 70 | 70 | 70 | 70 |
| | Wax | 2.5 | 2.5 | 2.5 | 2.5 | 2.5 | 2.5 | 2.5 |
| | Antioxidant 1 | 3 | 3 | 3 | 3 | 3 | 3 | 3 |
| | Antioxidant 2 | 1.5 | 1.5 | 1.5 | 1.5 | 1.5 | 1.5 | 1.5 |
| | Stearic acid | 3 | 3 | 3 | 3 | 3 | 3 | 3 |
| | Zinc oxide | 3 | 3 | 3 | 3 | 3 | 3 | 3 |
| | Sulfur | 1.5 | 1.5 | 1.5 | 1.5 | 1.5 | 1.5 | 1.5 |
| | Vulcanization accelerator 1 | 2.5 | 2.5 | 2.5 | 2.5 | 2.5 | 2.5 | 2.5 |
| | Vulcanization accelerator 2 | 2.5 | 2.5 | 2.5 | 2.5 | 2.5 | 2.5 | 2.5 |
| Specification | $\alpha$ (Mw of branched conjugated diene polymer) | 9000 | 20000 | 30000 | 9000 | 5000 | 9000 | 9000 |
| | $A = 42.9/\sqrt{\alpha} + 0.14$ | 0.59 | 0.44 | 0.39 | 0.59 | 0.75 | 0.59 | 0.59 |
| | Groove area ratio S (%) | 39 | 39 | 39 | 44 | 35 | 39 | 39 |
| | $A \times S$ | 23.1 | 17.3 | 15.1 | 26.1 | 26.1 | 23.1 | 23.1 |
| | 0.013 × butadiene unit content + 0.071 × styrene unit content | 0.97 | 0.97 | 0.97 | 0.97 | 0.97 | 0.97 | 0.97 |
| | Average styrene content of SBR (% by mass) | 19.4 | 19.4 | 19.4 | 19.4 | 19.4 | 19.4 | 19.4 |
| | Thickness G (mm) of tread | 6.0 | 6.0 | 6.0 | 6.0 | 6.0 | 4.0 | 2.5 |
| Evaluation | (a) Abrasion resistance (index) | 105 | 105 | 105 | 102 | 107 | 105 | 105 |
| | (b) Wet grip performance (index) | 106 | 106 | 106 | 104 | 109 | 105 | 93 |
| | (c) Acetone extractable content (index) | 108 | 110 | 112 | 108 | 106 | 108 | 108 |
| | Overall performance (average of (a), (b), and (c)) | 106 | 107 | 108 | 105 | 107 | 106 | 102 |

| | | Ex. 8 | Ex. 9 | Ex. 10 | Ex. 11 | Ex. 12 | Ex. 13 | Ex. 14 |
|---|---|---|---|---|---|---|---|---|
| Formulation (parts by mass) | SBR 1 (styrene content 36%, oil extended with 37.5 parts) | 20 | 20 | 20 | 20 | 20 | 20 | 20 |
| | SBR 2 (styrene content 24%, oil extended with 37.5 parts) | 30 | 30 | 30 | 30 | 30 | 30 | 30 |
| | SBR 3 (styrene content 25%) | 20 | 20 | 20 | 20 | 20 | 20 | 20 |
| | BR | 30 | 30 | 30 | 30 | 30 | 30 | 30 |
| | Oil Extender oil | 18.75 | 18.75 | 18.75 | 18.75 | 18.75 | 18.75 | 18.75 |
| | Oil Additional oil (PA32) | 11.25 | 11.25 | 11.25 | 11.25 | 11.25 | 11.25 | 11.25 |
| | Carbon black | 10 | 10 | 10 | 10 | 10 | 10 | 10 |
| | Silica 1 | 60 | 60 | 60 | 60 | 60 | 60 | 60 |
| | Silica 2 | 10 | 10 | 10 | 10 | 10 | 10 | 10 |
| | Silica 3 | 40 | 40 | 40 | 40 | 40 | 40 | 40 |
| | Silane coupling agent | 10 | 10 | 10 | 10 | 10 | 10 | 10 |
| | Resin | 9 | 9 | 9 | 9 | 9 | 9 | 9 |
| | Polyisoprene (Mw : 54000) | | | | | | | |
| | Styrene-butadiene copolymer (Mw : 4500) | | | | | | | |
| | Styrene-farnesene copolymer (Mw : 950) | | | | | | | |
| | Copolymer 1 (Mw : 9000, styrene content 0% by mass) | | | | | | | |
| | Copolymer 2 (Mw : 130000, styrene content 10% by mass) | | | | | | | |
| | Copolymer 3 (Mw : 9000, styrene content 10% by mass) | | | | | | | |
| | Copolymer 4 (Mw : 20000, styrene content 10% by mass) | | | | | | | |
| | Copolymer 5 (Mw : 30000, styrene content 10% by mass) | | | | | | | |
| | Copolymer 6 (Mw : 5000, styrene content 10% by mass) | | | | | | | |
| | Copolymer 7 (Mw : 9000, styrene content 2% by mass) | 8 | | | | | | |
| | Copolymer 8 (Mw : 9000, styrene content 20% by mass) | | 8 | | | | | |
| | Copolymer 9 (Mw : 9000, styrene content 25% by mass) | | | 8 | | | | |
| | Copolymer 10 (Mw : 9000, styrene content 35% by mass) | | | | 8 | | | |
| | Copolymer 11 (Mw : 100000, styrene content 10% by mass) | | | | | 8 | | |
| | Copolymer 12 (Mw : 4000, styrene content 10% by mass) | | | | | | 8 | |
| | Copolymer 13 (Mw : 12000, styrene content 10% by mass) | | | | | | | 8 |
| | Polymer styrene content | 2 | 20 | 25 | 35 | 10 | 10 | 10 |
| | Polymer butadiene content | 18 | 20 | 35 | 25 | 20 | 20 | 20 |
| | Polymer farnesene content | 80 | 60 | 40 | 40 | 70 | 70 | 70 |
| | Wax | 2.5 | 2.5 | 2.5 | 2.5 | 2.5 | 2.5 | 2.5 |
| | Antioxidant 1 | 3 | 3 | 3 | 3 | 3 | 3 | 3 |
| | Antioxidant 2 | 1.5 | 1.5 | 1.5 | 1.5 | 1.5 | 1.5 | 1.5 |
| | Stearic acid | 3 | 3 | 3 | 3 | 3 | 3 | 3 |
| | Zinc oxide | 3 | 3 | 3 | 3 | 3 | 3 | 3 |
| | Sulfur | 1.5 | 1.5 | 1.5 | 1.5 | 1.5 | 1.5 | 1.5 |
| | Vulcanization accelerator 1 | 2.5 | 2.5 | 2.5 | 2.5 | 2.5 | 2.5 | 2.5 |
| | Vulcanization accelerator 2 | 2.5 | 2.5 | 2.5 | 2.5 | 2.5 | 2.5 | 2.5 |
| Specification | α (Mw of branched conjugated diene polymer) | 9000 | 9000 | 9000 | 9000 | 100000 | 4000 | 12000 |
| | $A = 42.9/\sqrt{\alpha} + 0.14$ | 0.59 | 0.59 | 0.59 | 0.59 | 0.28 | 0.82 | 0.53 |
| | Groove area ratio S (%) | 39 | 39 | 30 | 43 | 39 | 33 | 50 |
| | A × S | 23.1 | 23.1 | 17.8 | 25.5 | 10.8 | 27.0 | 26.6 |
| | 0.013 × butadiene unit content + 0.071 × styrene unit content | 0.38 | 1.68 | 2.23 | 2.81 | 0.97 | 0.97 | 0.97 |
| | Average styrene content of SBR (% by mass) | 19.4 | 19.4 | 19.4 | 19.4 | 19.4 | 19.4 | 19.4 |
| | Thickness G (mm) of tread | 6.0 | 6.0 | 6.0 | 6.0 | 6.0 | 6.0 | 6.0 |
| Evaluation | (a) Abrasion resistance (index) | 102 | 104 | 100 | 95 | 93 | 103 | 100 |
| | (b) Wet grip performance (index) | 100 | 110 | 111 | 106 | 98 | 108 | 102 |
| | (c) Acetone extractable content (index) | 108 | 108 | 108 | 108 | 116 | 105 | 106 |
| | Overall performance (average of (a), (b), and (c)) | 103 | 107 | 106 | 103 | 102 | 105 | 103 |

Ex.: Example

REFERENCE SIGNS LIST

1 tire
2 tread
3 sidewall
4 bead

5 carcass
6 belt
7 tread face
8 groove
10 core
11 apex
12 carcass ply
13 inner layer belt
14 outer layer belt
15 shoulder portion
17 crown center (tread center line CL, equator EQ of tire 1)
20 step
G thickness of tread portion measured on equator in crosssection of tread portion taken in tire radial direction

## Claims

1. A tire, comprising a tread comprising a rubber composition that comprises at least one rubber component and a branched conjugated diene polymer,

   the branched conjugated diene polymer being a copolymer at least containing a branched conjugated diene, butadiene, and styrene as structural units,
   the tire satisfying the following relationships (1) and (2):

   Relationship (1):
   $$0.25 < A \leq 1.50;$$

   and

   Relationship (2):
   $$A \times S \leq 27.0$$

   wherein A is defined by $A = 42.9/\sqrt{\alpha} + 0.14$ wherein $\alpha$ represents a weight average molecular weight of the branched conjugated diene polymer; and S represents a groove area ratio (%) of a ground contact surface of the tread, and wherein $\alpha$ and S are measured according to the description.

2. The tire according to claim 1,
   wherein the tread has a thickness of 3.0 mm or more.

3. The tire according to claim 1 or 2,
   wherein the rubber component comprises at least one selected from the group consisting of isoprene-based rubbers, polybutadiene rubbers, and styrene-butadiene rubbers.

4. The tire according to any one of claims 1 to 3,
   wherein the branched conjugated diene is farnesene.

5. The tire according to any one of claims 1 to 4,
   wherein the branched conjugated diene polymer has a weight average molecular weight of 1000 to 20000.

6. The tire according to any one of claims 1 to 5, which satisfies the following relationship:

   $$0.30 \leq A \leq 0.80.$$

7. The tire according to any one of claims 1 to 6, which satisfies the following relationship:

   $$15\% \leq S \leq 45\%.$$

**8.** The tire according to any one of claims 1 to 7, which satisfies the following relationship:

$$A \times S \leq 22.0.$$

**9.** The tire according to any one of claims 1 to 8,
wherein a butadiene unit content (% by mass) and a styrene unit content (% by mass) each based on 100% by mass of the branched conjugated diene polymer satisfy the following relationship:

$$0.40 \leq 0.013 \times \text{butadiene unit content} + 0.071 \times \text{styrene unit content} \leq 2.70.$$

**10.** The tire according to any one of claims 1 to 9,
wherein the rubber composition comprises at least one liquid plasticizer selected from the group consisting of oils, liquid resins, and liquid diene polymers.

**11.** The tire according to any one of claims 1 to 10,
wherein the rubber composition comprises at least one resin selected from the group consisting of styrene resins, coumarone-indene resins, terpene resins, p-t-butylphenol acetylene resins, acrylic resins, dicyclopentadiene resins, C5 resins, C9 resins, and C5/C9 resins.

**12.** The tire according to any one of claims 1 to 11,
wherein the rubber composition comprises silica and carbon black.

**13.** The tire according to any one of claims 1 to 12,
wherein the rubber composition comprises a mercapto silane coupling agent.

**Patentansprüche**

**1.** Reifen, umfassend einen Laufstreifen, der eine Kautschukzusammensetzung umfasst, die mindestens eine Kautschukkomponente und ein verzweigtes konjugiertes Dien-Polymer umfasst,

wobei das verzweigte konjugierte Dien-Polymer ein Copolymer ist, das mindestens ein verzweigtes konjugiertes Dien, Butadien und Styrol als Struktureinheiten enthält,
wobei der Reifen den folgenden Verhältnissen (1) und (2) genügt:

Verhältnis (1):

$$0{,}25 < A \leq 1{,}50;$$

und

Verhältnis (2):

$$A \times S \leq 27{,}0$$

wobei A durch $A = 42{,}9/\sqrt{\alpha} + 0{,}14$ definiert ist, wobei $\alpha$ ein gewichtsmittleres Molekulargewicht des verzweigten konjugierten Dien-Polymers darstellt, und S einen Rillenflächenanteil (%) einer Bodenkontaktoberfläche des Laufstreifens darstellt, und wobei $\alpha$ und S gemäß der Beschreibung gemessen sind.

**2.** Reifen nach Anspruch 1,
wobei der Laufstreifen eine Dicke von 3,0 mm oder mehr aufweist.

**3.** Reifen nach Anspruch 1 oder 2,
wobei die Kautschukkomponente mindestens einen umfasst, der aus der Gruppe bestehend aus Isopren-basierten Kautschuken, Polybutadien-Kautschuken und Styrol-Butadien-Kautschuken ausgewählt ist.

4. Reifen nach einem der Ansprüche 1 bis 3,
wobei das verzweigte konjugierte Dien Farnesen ist.

5. Reifen nach einem der Ansprüche 1 bis 4,
wobei das verzweigte konjugierte Dien-Polymer ein gewichtsmittleres Molekulargewicht von 1000 bis 20000 aufweist.

6. Reifen nach einem der Ansprüche 1 bis 5, der dem folgenden Verhältnis genügt:

$$0,30 \leq A \leq 0,80.$$

7. Reifen nach einem der Ansprüche 1 bis 6, der dem folgenden Verhältnis genügt:

$$15\% \leq S \leq 45\%.$$

8. Reifen nach einem der Ansprüche 1 bis 7, der dem folgenden Verhältnis genügt:

$$A \times S \leq 22,0.$$

9. Reifen nach einem der Ansprüche 1 bis 8,
wobei ein Gehalt an Butadieneinheiten (Massen-%) und ein Gehalt an Styroleinheiten (Massen-%), jeweils bezogen auf 100 Massen-% des verzweigten konjugierten Dien-Polymers, den folgenden Verhältnissen genügen:

$0,40 \leq 0,013 \times$ Gehalt an Butadieneinheiten + $0,071 \times$ Gehalt an Styroleinheiten $\leq 2,70$.

10. Reifen nach einem der Ansprüche 1 bis 9,
wobei die Kautschukzusammensetzung mindestens einen flüssigen Weichmacher umfasst, der aus der Gruppe bestehend aus Ölen, flüssigen Harzen und flüssigen Dien-Polymeren ausgewählt ist.

11. Reifen nach einem der Ansprüche 1 bis 10,
wobei die Kautschukzusammensetzung mindestens ein Harz umfasst, das aus der Gruppe bestehend aus Styrolharzen, Cumaron-Inden-Harzen, Terpenharzen, p-t-Butylphenol-Acetylen-Harzen, Acrylharzen, Dicyclopentadienharzen, C5-Harzen, C9-Harzen und C5/C9-Harzen ausgewählt ist.

12. Reifen nach einem der Ansprüche 1 bis 11,
wobei die Kautschukzusammensetzung Siliziumdioxid und Ruß umfasst.

13. Reifen nach einem der Ansprüche 1 bis 12,
wobei die Kautschukzusammensetzung ein Mercaptosilan-Kopplungsmittel umfasst.

## Revendications

1. Pneumatique, comprenant une bande de roulement comprenant une composition de caoutchouc qui comprend au moins un composant de caoutchouc et un polymère diène conjugué ramifié,

le polymère diène conjugué ramifié étant un copolymère contenant au moins un diène conjugué ramifié, un butadiène, et un styrène comme unités structurales,
le pneumatique satisfaisant les relations (1) et (2) suivantes :

Relation (1) :

$$0,25 < A \leq 1,50$$

; et

Relation (2) :

$$A \times S \leq 27{,}0$$

dans lesquelles A est défini par A = 42,9 $\sqrt{\alpha}$ + 0,14, où $\alpha$ représente un poids moléculaire moyen en poids du polymère diène conjugué ramifié ; et S représente un rapport de zone de sillon (%) d'une surface de contact de sol de la bande de roulement et où $\alpha$ et S sont mesurés selon la description.

**2.** Pneumatique selon la revendication 1,
dans lequel la bande de roulement a une épaisseur de 3,0 mm ou plus.

**3.** Pneumatique selon la revendication 1 ou 2,
dans lequel le composant de caoutchouc comprend au moins un choisi dans le groupe constitué par les caoutchoucs à base d'isoprène, les caoutchoucs de polybutadiène, et les caoutchoucs styrène-butadiène.

**4.** Pneumatique selon l'une quelconque des revendications 1 à 3,
dans lequel le diène conjugué ramifié est un farnésène.

**5.** Pneumatique selon l'une quelconque des revendications 1 à 4,
dans lequel le polymère diène conjugué ramifié a un poids moléculaire moyen en poids de 1 000 à 20 000.

**6.** Pneumatique selon l'une quelconque des revendications 1 à 5, qui satisfait la relation suivante :

$$0{,}30 \leq A \leq 0{,}80.$$

**7.** Pneumatique selon l'une quelconque des revendications 1 à 6, qui satisfait la reation suivante :

$$15\ \% \leq S \leq 45\ \%.$$

**8.** Pneumatique selon l'une quelconque des revendications 1 à 7, qui satisfait la relation suivante :

$$A \times S \leq 22{,}0.$$

**9.** Pneumatique selon l'une quelconque des revendications 1 à 8, dans lequel une teneur en unité de butadiène (% en masse) et une teneur en unité de styrène (% en masse) chacune basée sur 100 % en masse du polymère diène conjugué ramifié satisfont la relation suivante :

0,40 $\leq$ 0,013 $\times$ teneur en unité de butadiène + 0,071 $\times$ teneur en unité de styrène $\leq$ 2,70.

**10.** Pneumatique selon l'une quelconque des revendications 1 à 9,
dans lequel la composition de caoutchouc comprend au moins un plastifiant liquide choisi dans le groupe constitué par les huiles, les résines liquides, et les polymères diène liquides.

**11.** Pneumatique selon l'une quelconque des revendications 1 à 10, dans lequel la composition de caoutchouc comprend au moins une résine choisie dans le groupe constitué par les résines styrène, les résines coumarone-indène, les résines terpène, les résines p-t-butylphénol acétylène, les résines acryliques, les résines dicyclopentadiène, les résines C5, les résines C9, et les résines C5/C9.

**12.** Pneumatique selon l'une quelconque des revendications 1 à 11, dans lequel la composition de caoutchouc comprend de la silice et du noir de charbon.

**13.** Pneumatique selon l'une quelconque des revendications 1 à 12, dans lequel la composition de caoutchouc comprend un agent de couplage mercapto silane.

FIG.1

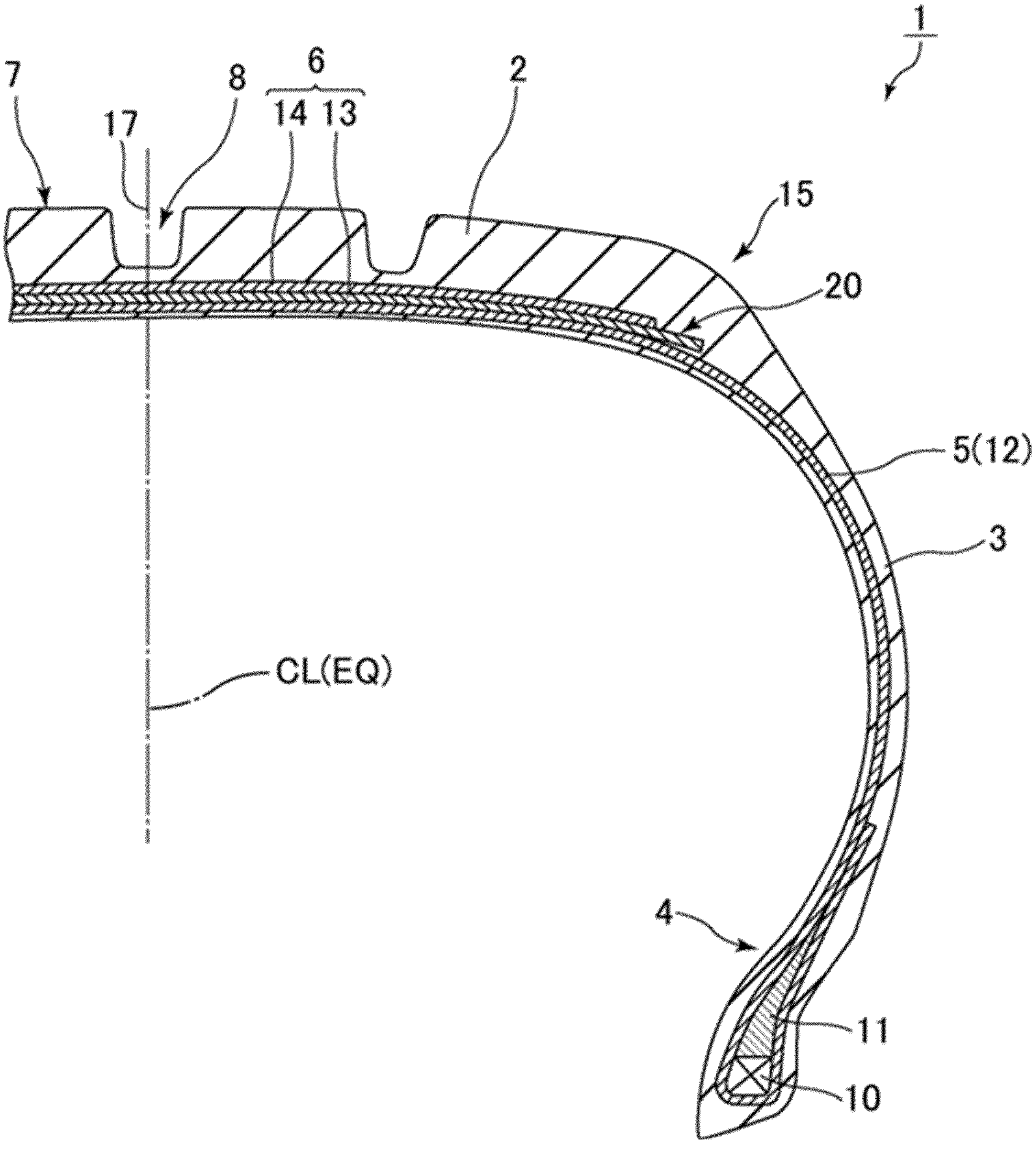

FIG.2